# EUROPEAN PATENT SPECIFICATION

(11) **EP 1 872 292 B1**
(45) Date of publication and mention of the grant of the patent: **10.10.2012**
(21) Application number: 06737073.4
(22) Date of filing: 03.03.2006
(51) Int. Cl.: G06F 19/00

(54) **METHOD AND APPARATUS FOR CUTTING A WORKPIECE**
VERFAHREN UND VORRICHTUNG ZUM SCHNEIDEN EINES WERKSTÜCKS
PROCEDE ET APPAREIL DE DECOUPE D'UNE PIECE D'USINAGE

(30) Priority: 09.03.2005 US 76004
(43) Date of publication of application: 02.01.2008
(73) Proprietor: Black & Decker, Inc., Newark, DE 19711 (US)
(72) Inventor: CARPENTER, David, A., Clarksville, MD 21029 (US); PUZIO, Daniel, Baltimore, MD 21234 (US); O'BANION, Michael, L., Westminster, MD 21157 (US)
(74) Representative: Bell, Ian Stephen
(86) International application number: PCT/US2006/007852
(87) International publication number: WO 2006/098922

(56) References cited:
- DE-A1- 2 523 139
- FR-A1- 2 630 362
- JP-A- 11 057 998
- US-A- 3 719 421
- US-A- 5 424 834
- US-A- 5 816 346
- US-A- 5 853 036
- US-A1- 2001 023 862
- US-A1- 2002 088 921
- US-A1- 2004 190 005
- US-A1- 2005 154 490
- US-B2- 7 153 203
- US-B2- 7 165 630

## Description

### BACKGROUND OF THE INVENTION

The present invention relates to a method and apparatus for obtaining a desired cut in a workpiece. More particularly, this invention relates to a cutting apparatus having a base, a scanner coupled with the base for determining the profile of a workpiece, a cutting member selectively movable with respect to the base as a result of information obtained from the user and/or the scanning process, and a computing device for controlling movement of the cutting apparatus during use.

One of the most difficult construction projects for most people is finish carpentry. While most people can readily learn how to cut miter cuts for making miter joints, miter cuts do not always create the best joint. For example, while a miter joint might be the preferred joint for framing the casing around a door or window, a miter joint is not the preferred joint for use in an inside corner situation for molding, a cope joint is.

Cope joints are created by cutting the profile of one piece of molding into the end of another piece of molding so that when the two pieces are placed together (usually in a corner and at right angles to one another) they mate to form an almost invisible joint. Further, and unlike miter joints, cope joints do not open up like miter joints as the molding dries and shrinks. For these reasons, cope joints are often a preferred method of installing molding and trim work. Unfortunately, cope cuts are difficult to make and require a high skill level to accomplish using traditional methods.

In addition to requiring more skill, cope cuts are more labor intensive and take more time to make using traditional methods than a simple miter cut. While initial cuts can occasionally be made with a power miter saw, cope cuts often must be finished by hand with the use of a coping saw. Even if a craftsman uses a powered cutting tool to finish the cope cut, most arrangements still require the contour or molding profile to be cut free hand by the craftsman. This often leads to imprecise cuts and errors in all but those cuts performed by the most skilled craftsman and, occasionally, to unusable cuts resulting in wasted time and materials. Consequently, numerous attempts have been made to speed up the process of and to assist craftsmen in cutting cope joints.

U.S. Patent No. 4,355,557, for example, discloses an apparatus for cutting molding that uses a plurality of templates. A drawback of this device is the necessity of a template for each type of molding the user desires to cut. U.S. Patent No. 5,136,904 discloses a motorized coping saw for creating cope cuts. While this device would reduce fatigue over the conventional hand saw method, this device still, however, requires the operator to have the skill necessary to cut out the profile free hand, thus leading to errors. U.S. Patent No. 5,853,036 discloses a motorized apparatus for cutting contoured molding. This apparatus allows a skilled workman to manually emulate the molding contour using a power cutting tool. While this device represents an improvement over the prior art in that it holds the cutting apparatus securely, the craftsman must still create the cut free hand, thereby leading to errors, wasted time and wasted material.

Therefore, there is a need for a device which can ascertain the profile of a piece of molding and then automatically move a cutting member through a path corresponding to the profile to create cope cuts that match the profile quickly and exactly. The present invention fills these and other needs.
FR 2630362 discloses an apparatus according to the preamble of claim 1.
According to an aspect of the present invention, there is provided an apparatus comprising the features of claim 1.
According to an aspect of the present invention, there is provided a method comprising the features of claim 14.

### SUMMARY OF THE INVENTION

In order to overcome the above stated problems and limitations, and to achieve the noted advantages, there is provided a motorized workpiece cutting apparatus having a motorized cutting member moveably and operably coupled with a base via a support member. The base includes a base frame upon which a first carriage is slidably mounted. The first carriage is moveable in a first direction by activation of a stepper motor. A second carriage is supported on and moveably coupled with the first carriage in a second direction, which is perpendicular to the first direction of the first carriage. A second stepper motor controls movement of the second carriage.

The apparatus also includes a scanner for scanning the profile of a workpiece desired to be cut and a computing device for controlling the apparatus. A user may instruct the apparatus to scan the profile of a piece of molding and store the profile in a memory component of the computing device. The user can then inform the computing device of the type of cut the user wishes to make in the subject molding. The user can then adjust the orientation of the cutting member as necessary, depending on the type of cut the user wishes to make, and place the molding on an upper surface of the base in preparation for the cutting process. When instructed to do so by the user, the computing device will control the cutting function by activating the cutting member and controlling the movement of the cutting member through the molding by way of sending the appropriate signals to the appropriate stepper motors to move the cutting apparatus in both the first and second directions. This device is well adapted to cut numerous types of cuts to create a wide variety of joints, including cutting a cope joint by moving the cutting member through a cutting path, which corresponds, to the scanned profile of the molding being cut.

Additional objects, advantages, and novel features of the invention will be set forth in part in the description which follows, and in part will become apparent to those skilled in the art upon examination of the following, or may be learned by practice of the invention.

### BRIEF DESCRIPTION OF THE SEVERAL VIEWS OF THE DRAWINGS

The features of the invention noted above are explained in more detail with reference to the embodiments illustrated in the attached drawing figures, in which like reference numerals denote like elements, in which Figs. 1-22 illustrate various embodiments of the present invention, and in which:

FIG. 1 is a perspective view of a first embodiment of a cutting apparatus of the present invention having a workpiece positioned thereon;

FIG. 1A is a perspective view of a portion of a work surface of the cutting apparatus of Fig. 1;

FIG. 2 is a side elevational view of the cutting apparatus of Fig. 1 with a portion of the right clamp member cut away for clarity;

FIG. 3 is a rear elevational view of the cutting apparatus of Fig. 1;

FIG. 4 is a perspective view of the cutting apparatus of Fig. 1 with a portion of the housing of the base cut away to further illustrate the present invention;

FIG. 5 is an exploded view of the second carriage, the adjustment mechanism and a portion of the support of the apparatus of the cutting apparatus of Fig. 4;

FIG. 6 is a perspective view of an embodiment of a scanner of the cutting apparatus of the present invention;

FIG. 7 is a front elevational view of the scanner of Fig. 6 with a portion of the housing thereof cut away for clarity;

FIG. 8 illustrates both a plan view and a cross-sectional view of a typical piece of molding for a chair rail;

FIG. 9 is a side elevational view of the scanner of Fig. 7 during use;

FIG. 10 illustrates, on the right side, a plain view of the molding of Fig. 8 midway through receiving a cope cut in accordance with the present invention to allow it to mate with a corresponding piece of molding, illustrated in a cross-sectional view on the left side of Fig. 10;

FIG. 11 illustrates, on the left side, a piece of crown molding cut in accordance with a method of the present invention by the cutting apparatus and being fitted into an upper corner of a room to form a cope joint with a corresponding piece of crown molding, illustrated in a cross-sectional view on the right of Fig. 11;

FIG. 12 is a fragmentary plan view of an embodiment of a control panel to permit the user to interact with the cutting apparatus of the present invention;

FIG. 13 illustrates a method of cutting a workpiece according to the present invention;

FIG. 14 illustrates a method of scanning a profile of a workpiece and cutting a cope cut therein according to the present invention;

FIG. 15 illustrates an alternate embodiment of a user interface for instructing the cutting apparatus of a desired cut according to the present invention;

FIG. 16 illustrates a perspective view of a second embodiment of a cutting apparatus of the present invention;

FIG. 17 is a side elevational view of the cutting apparatus of Fig. 16;

FIG. 18 illustrates a partially schematic side elevational view of an alternate embodiment of a cutting member and support of the present invention;

FIG. 18A is an enlarged view of the area 18A of Fig. 18;

FIG. 19 is a partially schematic side elevational view of an accessory for use with the cutting member of Fig. 18;

FIG. 20 is a partially schematic side elevational view of a second accessory for use with the cutting member of Fig. 18;

FIG. 21 is a side elevational view of an embodiment of a cutting blade of the present invention;

FIG. 22 is fragmentary plan view of an alternate embodiment of a scanner of the present invention; and

FIG. 23 is fragmentary front side elevational view of an alternate embodiment of a scanner of the present invention with a portion of the housing cut away for clarity.

### DETAILED DESCRIPTION OF THE INVENTION

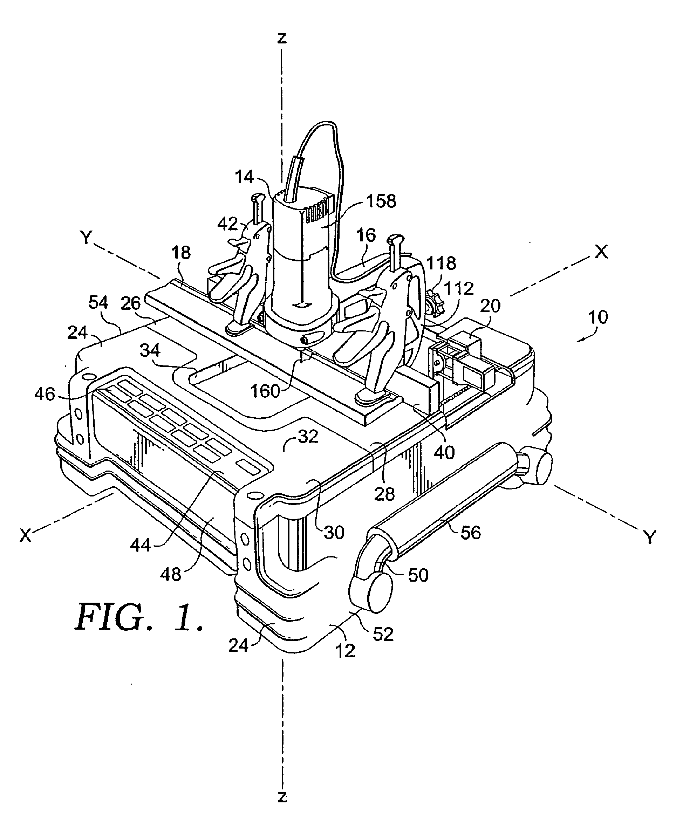

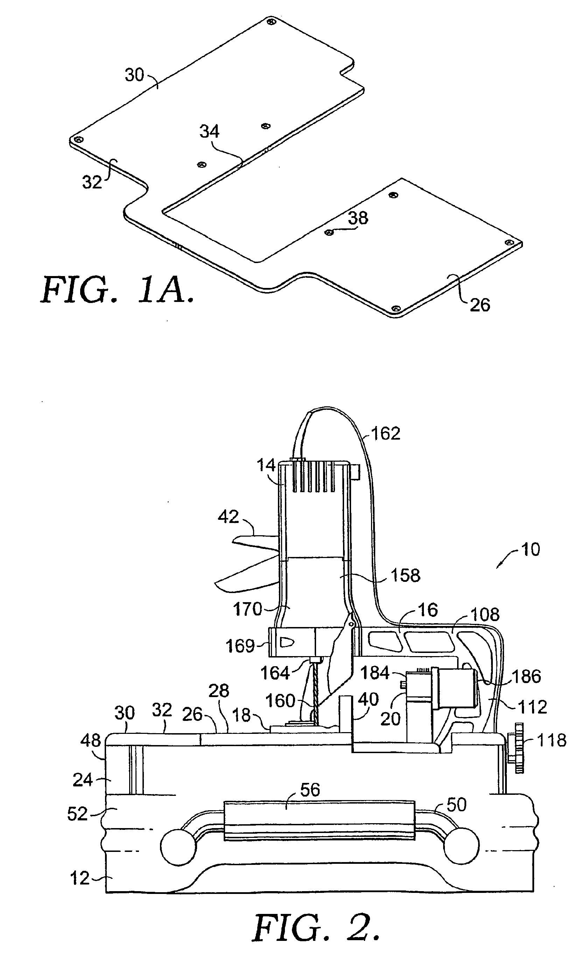

Referring now to the drawings in more detail and initially to FIG. 1, numeral 10 generally designates a workpiece cutting apparatus of the present invention. The apparatus 10 includes a base 12 and a cutting member 14. The cutting member 14 is movably coupled with the base 12 via a support 16. The support 16 is movably coupled with the base 12 to permit the operator to cut a desired profile in a workpiece 18. A scanner 20 is mounted on the base 12 for scanning the profile of the workpiece 18 desired to be cut, as described in more detail below.

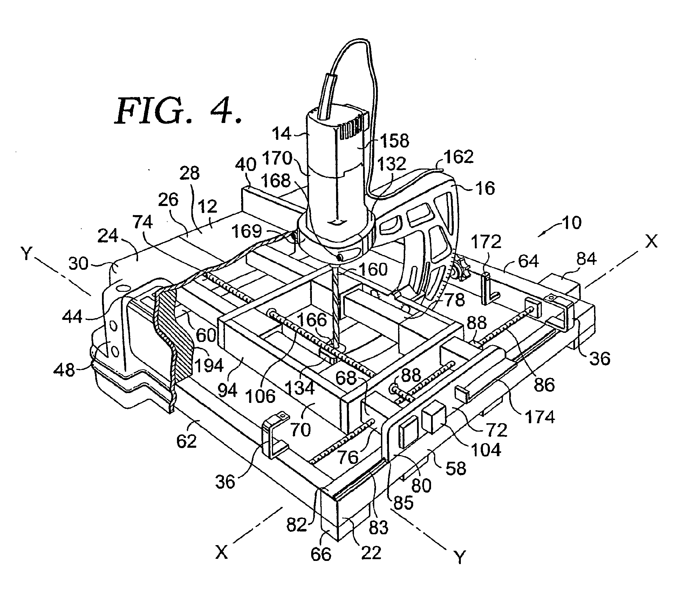

The base 12, as best illustrated in FIG. 4, preferably includes a base frame 22 and a housing 24. A plate member 26, best illustrated in FIG. 1A, and the housing 24 cooperate to encase the base frame 22. An upper surface 28 of the plate member 26 and an upper surface 30 of the housing 24 cooperate to define a work surface or a table top 32 upon which the workpiece 18 rests during operation of the apparatus 10.

A portion of the plate member 26 is cut away to provide a notch 34. The notch 34 receives a portion of the cutting member 14 and permits the cutting member to freely move around therein during use. The notch 34 also provides an opening through the work surface 32 into the base 12. The plate member 26 is preferably coupled with the base frame 22 via brackets 36 with screws (not shown) which pass through apertures 38 in the plate member 26, in a manner well known in the art.

The base 12 also preferably includes a fence 40 against which the workpiece 18 is abutted during use, as best illustrated in FIG. 1. The fence 40 preferably includes hold-downs or clamps 42 for securing the workpiece 18 to the work surface 32 during the cutting operation. The housing also preferably includes a control panel 44 with a plurality of buttons 46 thereon for controlling operation of the cutting apparatus 10. The control panel 44 is preferably at a front 48 of the base 12. Handles 50 are preferably provided on the right and left sides 52, 54, respectively, to permit the user to carry the apparatus from one place to another. The handles 50 preferably include a gripping portion 56 that includes some type of padding, such as rubber, vinyl or foam, to make carrying the apparatus 10 more comfortable.

Turning now to FIG. 4, the base frame 22 is preferably square in shape and has right and left sidewalls 58, 60 and front and back walls 62, 64. The sidewalls 58, 60 are preferably parallel to one another and in a generally horizontal orientation. Front and back walls 62, 64 are also preferably parallel to one another and in a horizontal orientation. Front and back walls 62, 64 are generally perpendicular to the sidewalls 58, 60 and span there between to define a periphery of the base frame 22. Legs 66 are provide at the corners of the base frame 22 for supporting the apparatus.

The base 12 includes a first carriage 68 and a second carriage 70. The support 16 is selectively coupled with the second carriage 70 and the carriages 68, 70 cooperate with one another to provide movement of the cutting member 14 during operation of the apparatus 10, as described in more detail below.

The first carriage 68 is designed to provide movement of the cutting member 14 from front to back, i.e., along the X-axis illustrated in FIG. 4, while the second carriages 70 is designed to provide movement of the cutting member from side to side, i.e., along the Y-axis illustrated in FIG. 4. The first carriage 68 has right and left end plates 72, 74. A pair of generally parallel and horizontal arms 76, 78 connect and extend between the end plates 72, 74. The end plates 72, 74 have a bottom surface 80 that abuts and rides along an upper surface 82 of the right and left sidewalls 58, 60 of the base frame 22. The upper surfaces 82 have a ridge 83 that slidingly mates with a corresponding groove 85 in the bottom surfaces 80 of the end plates 72, 74. Accordingly, the first carriage 68 is preferably supported on the base frame 22 by way of the end plates 72, 74 in manner which permits the first carriage 68 to move forward and backward in the X direction.

Movement of the first carriage 68 along the X-axis is accomplished by a first or X stepper motor 84 which is coupled with a threaded rod 86 having its longitudinal axis parallel with the X axis of the apparatus 10. The threaded rod or drive shaft 86 extends from the back wall 64 to the front wall 62, while passing through a portion of the first carriage 68. In the illustrated embodiment, the X drive shaft 86 passes through the front and rear arms 76, 78 of the first carriage 68. The arms 76, 78 are provided with bushings 88 which receive the rod 86. The bushings 88 are internally threaded and cooperate with the threaded rod 86 such that when the stepper motor 84 rotates the threaded rod 86, the first carriage 68 is moved along the longitudinal axis of the rod 86, which corresponds with the X-axis of the apparatus 10.

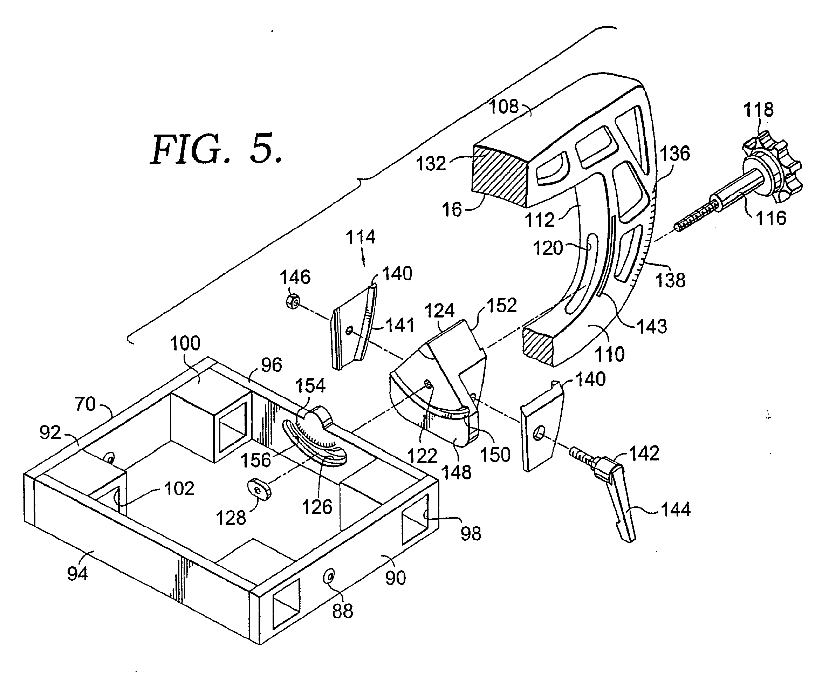

The second carriage 70, as best illustrated in FIG. 5, is preferably square in shape and is defined by right and left cross arms 90, 92, which are generally parallel to one another, and front and back cross arms 94, 96, which are generally parallel to each other and perpendicular to and extend between right and left cross arms 90, 92. The right and left cross arms 90, 92 both preferably have a pair of openings 98 there through for slidably receiving the front and rear arms 76, 78 of the first carriage 68. The second carriage 70 is thereby supported on and slidably coupled with the first carriage 68 and movable along the arms 76, 78 from the right side 52 to the left side 54 of the base 12, i.e. the second carriage 70 is movable along the first carriage 68 in the direction of the Y-axis.

Guide blocks 100 each having a bore 102 there through and are preferably provided adjacent each of the openings 98 such that the bores 102 are coaxial with the openings 98 for receiving the arms 76, 78 to help support the second carriage 70 on the first carriage 68.

The second carriage 70 is moved along the first carriage 68 by way of a second or Y stepper motor 104 (FIG. 4). The Y stepper motor 104 is mounted on the right end plate 72 of the first carriage 68 and includes a threaded rod or drive shaft 106. The drive shaft 106 extends between the end plates 72, 74 and passes through the right and left cross arms 90, 92 of the second carriage 70. The right and left cross arms 90, 92 are provided with bushings 88 such that when the drive shaft 106 is rotated by the Y stepper motor 104, the second carriage is moved along the drive shaft 106, as discussed above, from one side of the base 12 to the other.

The support 16, as best illustrated in FIG. 5, is preferably a C-shaped member having an upper arm 108, a lower arm 110 and an adjoining section 112. The support 16 is selectively coupled with the back cross arm 96 of the second carriage 70 by way of an adjustable coupling mechanism 114.

The adjustable coupling mechanism 114 preferably includes a bolt 116 having a user engagable knob 118. The bolt 116 passes through a slot 120 in the support, bore 122 in an adjustment block 124, and a slot 126 in the back cross arm 96 of the second carriage 70. A nut 128 is threadably received on the free end of the bolt 116.

The adjustable coupling mechanism 114 permits the user to adjust the orientation of the cutting member 14 with respect to the work surface 32. For example, because the slot 120 in the support 16 is elongate in nature and in a generally vertical orientation, the support 16 can be rotated so that a forward end 132 of the upper arm 108 is moved toward the front 48 of the base 12 while a forward end 134 of the lower arm 110 is moved away from the front 48 of the base 12. While the support 16 is being rotated, the slot 120 slides along the bolt 16. This motion causes the cutting member 14 to be tilted forward and therefore changes the forward tilt or bevel angle. This arrangement makes it so that the cutting blade 160 pivots about a point that is in the plane of the work surface 32. A gauge 136 can be provided to measure the angle of forward tilt by providing indicia 138 on a side of the support 16.

The forward tilt or bevel angle is set in connection with the adjustment block 124 by way of wings 140 which are used to clamp the adjoining section 112 of the support 16 to the adjustment block 124. The wings 140 have a ridge 141 on their inner surface that cooperates with a groove 143 in each of the sides of the adjoining section 112. A bolt 142 having a lever arm 144 passes through the wings 140 and the adjustment block 124 and cooperates with a nut 146 to pinch the adjoining section 112 of the support 16 between the wings 140 to thereby set the bevel angle.

The adjustable coupling mechanism 114 also permits a user to selectively vary the side-to-side or back cut angle. When assembled, a front face 148 of the adjustment block 124 abuts a rear surface of the back cross arm 96 of the second carriage 70. An arcuate channel 150 in the front face 148 of the adjustment block 124 aligns with and cooperates with a corresponding arcuate ridge (not shown) on the rear face of the back cross-arm 96. The support 16 is partially received in a groove 152 in a rear face of the adjustment block 124 and is clamped to the adjustment block 124 via the wings 140. With the bolt 116 loose, the adjustment block 124 can pivot about the bolt 116 to tilt the upper arm 108 from side to side and thereby adjust the bevel or back cut angle. The amount of back cut can be determined by providing a gauge 154 on the front surface of the back cross arm 96 of the second carriage 70.

The nut 128 is received in and slides in an enlarged portion 156 of the slot 126. The arcuate channel 150 and the arcuate slot 126 are concentric arcs with the slot 126 having a smaller radius of curvature than the arcuate channel 150. By providing the channel 150 and the slot 126, the support 16 does not pivot about the longitudinal axis of the bolt 116, but instead pivots about a pivot point above the top of the adjustment block 124. This arrangement makes it so that the cutting blade 160 pivots about a point that is in the plane of the work surface 32 instead of about a point below the work surface 32.

The cutting member 14 (FIG. 4) includes a motor 158 and a cutting blade 160. While the motor 158 is illustrated as having a power cord 162, it is within the scope of the present invention to provide a cordless motor. In the embodiment illustrated, the motor 158 is a rotary motor and the cutting blade 160 is a spiral-cutting bit, an embodiment of which is discussed in greater detail below. It should be noted, however, that the motor 158 could be a motor that provides a reciprocating or up and down motion and the blade 160 could be of the type found in a coping saw or scroll saw. A spiral-cutting bit, however, has been found to be beneficial in this arrangement, as discussed below.

In that regard, the illustrated embodiment discloses a double-shanked spiral bit. This bit has been found beneficial in cutting a smooth cut through molding as well as producing a thin kerf. Accordingly, the cutting member 14 includes an upper collet 164 and a lower collet 166. The lower collet 166 is located on the lower arm 110 of the support 16 adjacent the forward end 134. The upper collet 164 is directly below the motor 158 and is axially aligned with the lower collet 166. The motor 158 is coupled with the forward end 132 of the upper arm 108. This can be accomplished in any traditional means, but is illustrated as being done by a pair of screws 168 through a collar 169 to clamp a housing 170 of the motor 158 between the collar 169 and the forward end 132 of the upper arm 108.

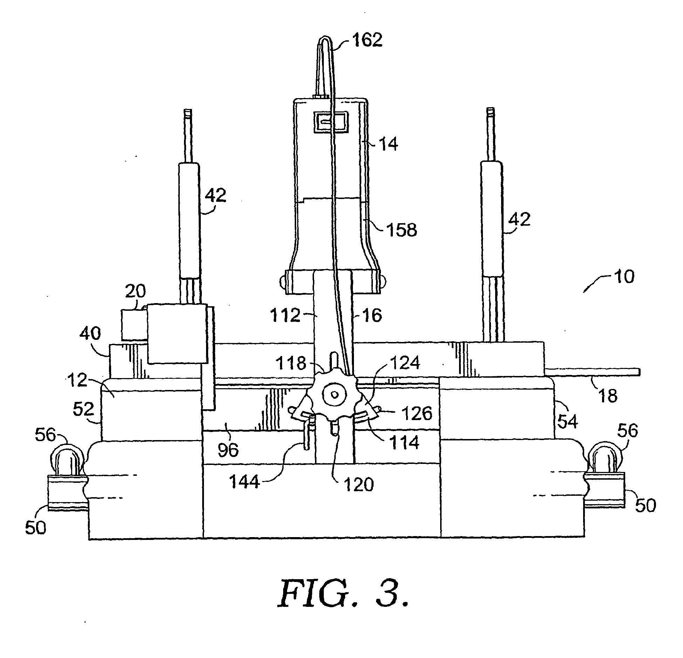

The scanner 20 is preferably stationary and coupled with the base frame 22 by way of a bracket 172. While the scanner 20 is disclosed and illustrated in Figs. 1-4 as being stationary with the sample workpiece moving thereunder, it is well within the scope of the present invention to have the workpiece be stationary and the scanner mounted on the second carriage 70 such that it is moved along the length of the stationary workpiece during a scan.

The scanner 20 is mounted such that it is positioned above a small moveable table or sled 174. The sled 174, for reasons discussed in more detail below, is designed to hold a sample portion 176 of the workpiece 18 desired to be cut. The sled 174 has a fence 178 and may include a clamp (not shown) for securing the sample portion 176 to the sled 174. The sled 174 is coupled with the right end plate 72 of the first carriage 68 such that activation of the X stepper motor 84 moves the sled 174 with the first carriage 68 along the X-axis.

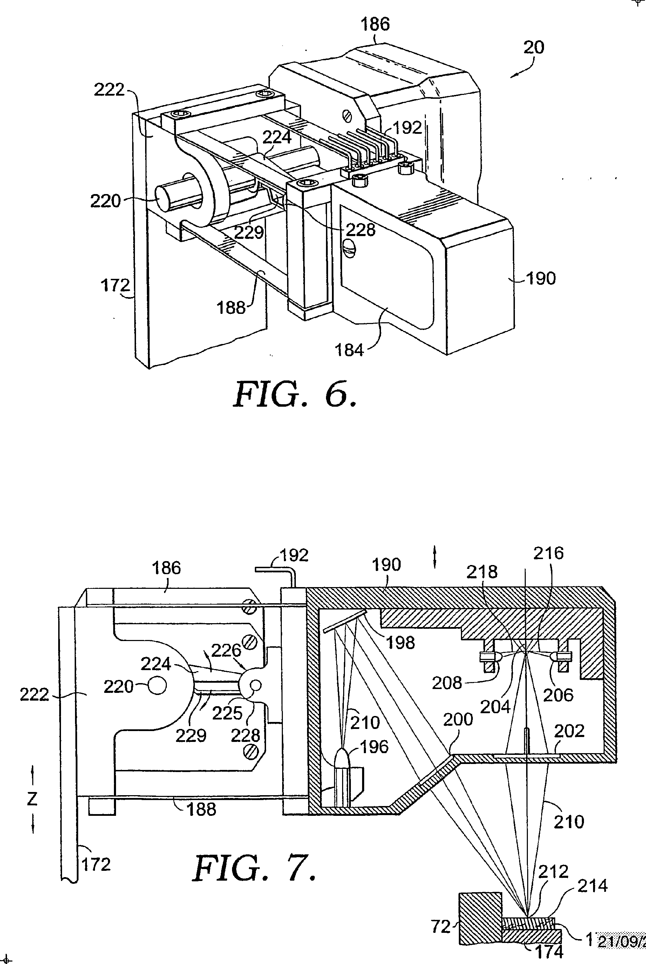

Turning now to FIG. 6, the scanner 20 includes an optical scanner 184 coupled with a Z stepper motor 186 preferably via parallel tandem flexures 188. The flexures 188 help maintain sensor parallelism during movement along the z-axis while essentially eliminating mechanical hysteresis. The flexures 188 eliminate the need for bearings and the problems associated therewith (e.g., play, sticking, wear, etc.) that could reduce the accuracy of readings taken by the sensor 184. The optical sensor 184 has a housing 190 for enclosing optical components, which are best illustrated in FIG. 7. The housing 190 also has an electrical connection 192 for electrically coupling the optical sensor 184 with a computing device 194 of the apparatus 10 that is contained within the housing 24.

As illustrated in FIG. 7, the optical components contained within the housing 190 of the optical sensor 184 include a light source, such as a light emitting diode 196, a mirror 198, a focusing lens 200, a collecting lens 202, a beam splitter 204, and a pair of sensors 206, 208. The LED 196 emits a beam of light 210, which is directed toward the mirror 198. The beam of light is preferably infrared due to the increased emission/efficiency of infrared LED devices over that of visible LED devices. The mirror 198 reflects the beam of light 210 toward the focusing lens 200. The focusing lens 200 focuses the beam to a point 212 on the upper surface 214 of the sample portion 176 of the workpiece 18, as discussed in greater detail below.

The focal length of the focusing lens 200 (i.e. the distance between the focusing lens 200 and the focal point 212) is a predetermined and set distance. The beam 210 then reflects off of the upper surface 214 of the sample portion 176 toward the collecting lens 202, which focuses the beam 210 on the beam splitter 204. The beam 210 is then split by the beam splitter 204 into two parts with the first part 216 being reflected to the right sensor 206 and the second part 218 being reflected to the left sensor 208. The sensors 206, 208 can be phototransistor sensors or other photo sensors of adequate bandwidth. The LED 196 and the sensors 206, 208 are electronically coupled with the electrical connection 192 via wires (not shown).

The Z stepper motor 186 includes a rotatable drive shaft 220. The drive shaft 220 is supported in a generally horizontal orientation and coupled with the bracket 172 via a pair of bearings 222. A torque arm 224 is coupled at its proximal end with the drive shaft 220 in a generally perpendicular orientation. A distal end of the torque arm 224 contacts a pin 225 which is fixed in a bearing 226 of a mount 228 on a side of the housing 190 of the optical sensor 184. A stiff flat spring 229, attached to the torque arm 224, biases the hard surface of the distal end of the torque arm 224 against the pin 225, thus providing a zero hysteresis connection between the torque arm 224 and the housing 190. As the drive shaft 220 is rotated by the Z stepper motor 186, for reasons discussed in more detail below, the torque arm 224 slides against the pin 225 of the bearing 226 and will raise or lower the optical scanner 184. The flexures 188 cooperate with each other in a manner similar to parallel linkage arms to maintain the optical scanner 184 in a generally horizontal orientation during the vertical movement of the optical sensor 184.

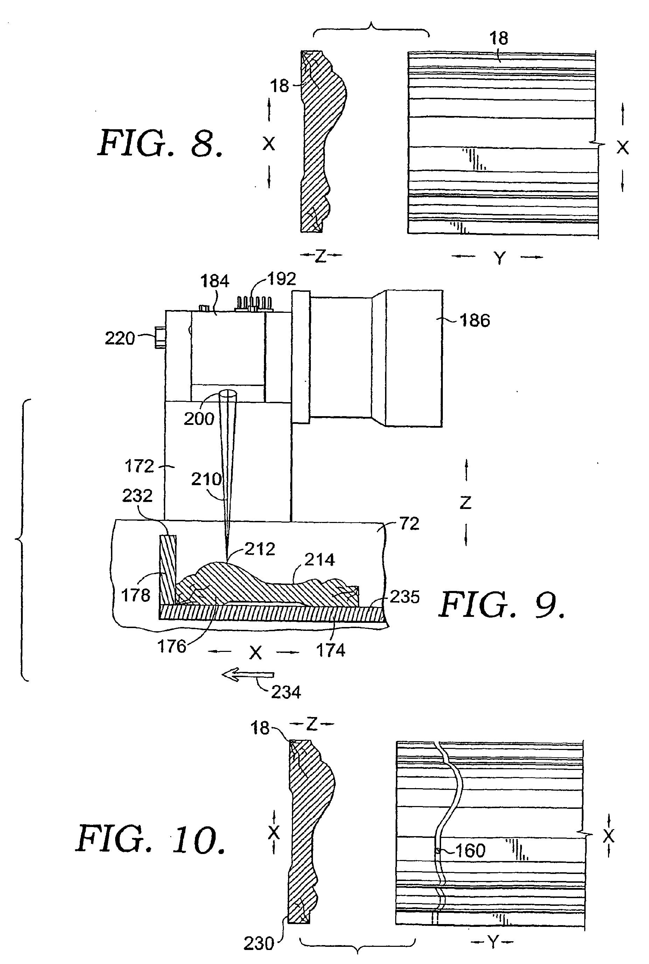

FIG. 8 illustrates two views of an exemplar workpiece 18. In this particular example, the workpiece 18 is a piece of chair rail that is available to users in long strips. The workpiece has a longitudinal axis which corresponds with the Y-axis, illustrated in the plan view on the right, and a transverse axis, which is illustrated as the X-axis in the plan view on the right. The workpiece 18 also has a thickness which varies along the profile and is represented as the Z-axis illustrated in the side elevational view on the left:

The operation of the scanner 20 will now be described in detail. In that regard, the scanning process usually begins by the user placing a sample portion 176 of the workpiece 18 to be cut on the sled 174 that is located under the optical sensor 184. The sample portion 176 is laid flat on the sled 174 such that a backside 230 of the sample portion 176 rests on the sled 174. The sample portion is pushed up against the fence 178, as illustrated in FIG. 9. The sample portion 176 can be secured in place by a clamp (not shown). The user activates the scanner 20 via buttons 46 on the control panel, as discussed in greater detail below.

The sled 174 is preferably in a rearward most position at the start of the scan such that the beam of light 210 emitted from the optical sensor 184 shines down upon an upper surface 232 of the fence 178. This represents a known distance and setting for the optical sensor 184 and functions as a reference point. In this position, the optical sensor will be in a null condition. This null condition is better understood by referring to FIG. 7. In the null condition, light from the light source 196 is focused by focusing lens 200 to a point 212 on a surface. This light at this point 212 is reflected directly back into the collecting lens 202 and focused on the center of the splitting mirror 204 such that the amount of light collected is split equally between sensors 208 and 206. In this condition the difference of the electrical signal from the sensors 208 and 206 will be zero (the null condition).

The computing device 194 then activates the X stepper motor 84 thereby causing the rod 86 to rotate. As the rod 86 rotates, the first carriage 68 moves from its rearward most position toward the front 48 of the base 12. As the first carriage 68 moves forward, the sled 174, and consequently the sample portion 176, moves under the optical sensor 184 in the direction indicated by the arrow 234 in FIG. 9. As the sample portion 176 is moved under the optical sensor 184, the change in the profile or thickness of the sample portion 178 will initially cause a change in the distance between the upper surface 214 of the sample portion 176 and the focusing lens 200 of the optical sensor 184. This change in distance will make the beam 210 out of focus on the upper surface 214 of the sample portion 176. For example, when the upper surface 214 is raised the focused point 212 will appear on the surface to the left of center. When the upper surface 214 drops the focused point 212 will appear on the surface to the right of center. This movement of the focused point to the left or right of center will cause an associated shifting of the light beam 210 such that the intensity of the light passing through the collecting lens 202 becomes biased to the left or to the right of the center of the splitting mirror 204 such that there is a difference in the amount of light collected at each sensor 208 and 206. This information is then relayed on to the computing device 194, which interprets this difference in signal strength as a corresponding difference in profile elevation.

In response to this difference, the computing device 194 emits an appropriate signal to the Z stepper motor 186 to rotate the shaft 220 to raise or lower the optical sensor 184 to put the beam 210 back into focus on the upper surface 214 of the sample portion 176 such that the point 212 is centered and this light is reflected directly into the collecting lens and split equally between the two sensors 208 and 206. Thus the sensor is once again at its null condition. Accordingly, as the sample portion 176 moves under the optical sensor 184, the Z stepper motor 186, by way of signals from the computing device 194, moves the optical sensor 184 up and down to keep the sensor in its null condition and hence at a constant distance above the sample portion 176.

In other words, the optical sensor moves up and down as a sample portion is moved there under in a path that follows or mirrors the profile of the sample portion 176. Once the sled 174 has been moved far enough forward that the trailing edge of the sample portion 176 is reached, the beam will hit an upper surface 235 of the sled 174 upon which the sample portion 176 rests. The computing device 194 interprets the sensor's position as the edge of the sample portion and terminates the scan process. The up and down movement, via plus or minus z-steps to monitor null, of the optical sensor 184 during the course of the scan is stored in a memory component of the computing device 194 as a change in the Z-axis or a Δ Z with respect to the X movement. It should be noted that the z-stepper rotary steps do not linearly correlate to the optical sensor's 184 linear z-height steps due to the nature of the linkage between the two. Therefore the sensor's 184 movement is linearized with the use of a look up table to precisely correlate the rotary movement of z-stepper motor 186 to the linear motion of the optical scanner sensor head 184. The computing device 194 then signals the X motor 84 to rotate in the opposite direction to return first carriage 68, and in turn the sled 174, back to the start position.

With the profile of the sample portion 176 now scanned and stored in the memory component of the processor 194, the user can now cut or cope the workpiece 18 as desired. For example, if the user desires to cope the left end of the workpiece 18 so that it will fit into a standard 90 degree corner and butt up against another piece of workpiece having the same profile and being perpendicular thereto, the user places the workpiece desired to be coped onto the work surface 32 of the apparatus and abuts the workpiece 18 up against the fence 40. The workpiece 18 is then clamped down by one of the clamps 42.

Once the workpiece is in position, the user informs the computing device 194 of the apparatus 10 of the desired cut, as discussed in greater detail below, by way of the buttons 46 on the control panel 44 and the cut is initiated. The motor 158 is then activated thereby rotating the spiral cutting bit 160 and the X stepper motor 84 would be activated to rotate the rod 86 to move the first carriage 68 toward the front 48 of the base 12. Continuing with the example of the illustrated chair rail that was previously scanned, part of the resulting cut is illustrated in FIG. 10. Once the bit 160 is aligned with the front edge of the fence 40, the computing device 194 will send signals to the Y stepper motor 104 to move the second carriage 70 back and forth along the Y-axis as the X stepper motor moves the bit through the workpiece toward the front 48 of the apparatus 10 along the X direction. The stored profile of the workpiece 18, i.e. the Δ Z, is transformed by the computing device 194 into a corresponding Δ Y to trace out the profile in the workpiece 18 and thereby produce a perfect cope joint.

In this example, since the workpiece is abutted flat up against a wall and mounted thereto, the bevel angle, i.e., the angle at which the cutting member 14 and the bit 160 are tilted front to back, is zero. In other words, no bevel angle is needed and the bit 160 is in a plane that is perpendicular to the X axis. However, most carpenters prefer to back cut their cope joints a little so that only the outer edge of the profile abuts the profile of the adjoining piece. Accordingly, to provide for the back cut, the cutting member 14 and hence the cutting blade 160 would be tilted to the left side 54 of the base 12 five to 15 degrees from vertical. This is accomplished manually by loosening the user engagable knob 118, rotating the support 16 about the bolt 116 until the desired back cut angle is achieved, as indicated by the gauge 154, and retightening the knob 118 to lock the cutting member 14 in place at the desired angle.

The right side of FIG. 10 illustrates a plan view of the workpiece 18 as it is partially cut, as well as the remaining path to be taken by the cutting blade 160 in dashed lines. As can be seen, the portion of the workpiece 18 to the right side of the cutting blade 160 will readily meet with another piece of the workpiece, illustrated on the left side of FIG. 10 at a right angle, to form a tight cope joint after the cut is completed.

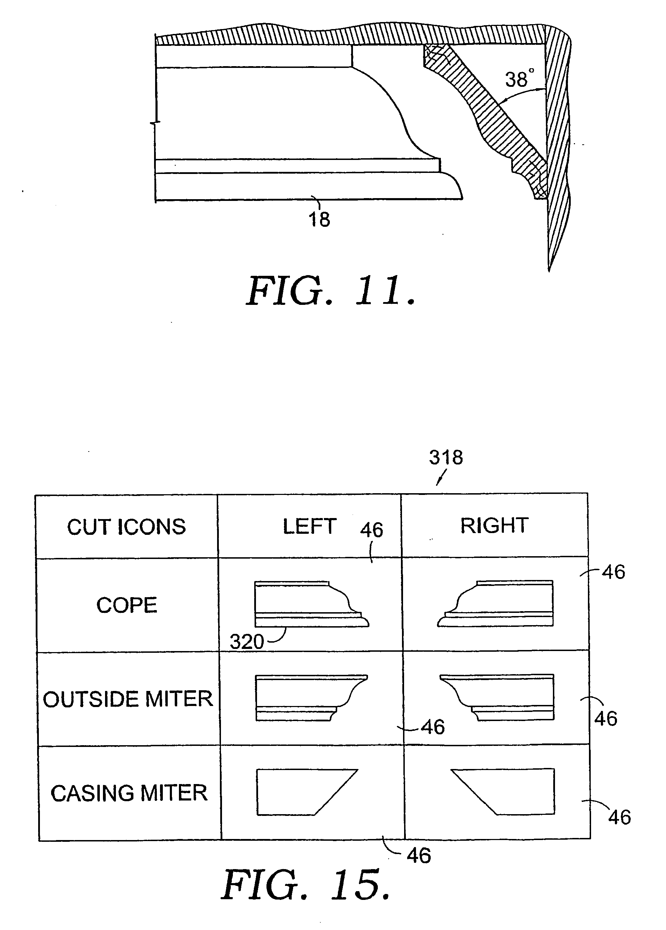

While the discussion above with regards to scanning and coping a workpiece having a desired profile was done in connection with a piece of chair rail that is mounted flush up against the wall, the present apparatus also permits the cutting of items which are not secured flat to the wall, such as crown molding (FIG. 11). The process for cutting crown molding is similar with a portion of the crown molding to be cut being placed flat on its back on the sled 174 and scanned. The cutting process is also similar with the exception that the cutting member 14 must also be tilted forward to accommodate for the crown molding's cope angle. This is done by loosening the bolt 142, which in turn loosens the grip the wings 140 have on the adjoining section 112 of the support 16, at which point the cutting member 14 can be tilted toward the front as the slot 120 in the support 16 slides along the bolt 116. The user engagable knob 118 may also be loosened to allow for adjustment of back cut angle.

When the desired cope angle is reached, as indicated by the cope angle gauge 136 on the side of support 16, the bolt 142 is tightened to clamp the support 16 between the wings 140 to set the cope angle. The bolt 116 is also tightened to set the back cut angle. The particular embodiment of the adjustable coupling mechanism 114 described and illustrated herein permits a user to set the cope angle necessary for a workpiece of a particular profile and then be able to tilt the cutting member 14 from side to side for cutting left or right end cuts without having to readjust the cope angle.

For example, if the apparatus 10 is used to cut 52 degree crown molding (a widely available crown molding in which the crown molding, when properly installed, tilts back 52 degrees from being perpendicular to the wall or 38° out from the wall), as illustrated in FIG. 11, the cutting member 14 is tilted forward 52 degrees, as indicated by the cope angle gauge 136. As the X and Y stepper motors 84, 104 move the cutting member 14 forward and side to side to cut out the desired profile, the tilting of the cutting blade 160 forward to match the cope angle accommodates for the fact that the workpiece will be tilted when installed. Additionally, while the cutting apparatus 10 simply transferred the scanned Δ Z to corresponding Δ Y movements in the chair rail example above, the computing device 194 must transform the Δ Z profile in the crown molding instance to come up with the proper Δ Y to accommodate for the fact that the workpiece 18 is angled when installed. This is accomplished in the method described in more detail below.

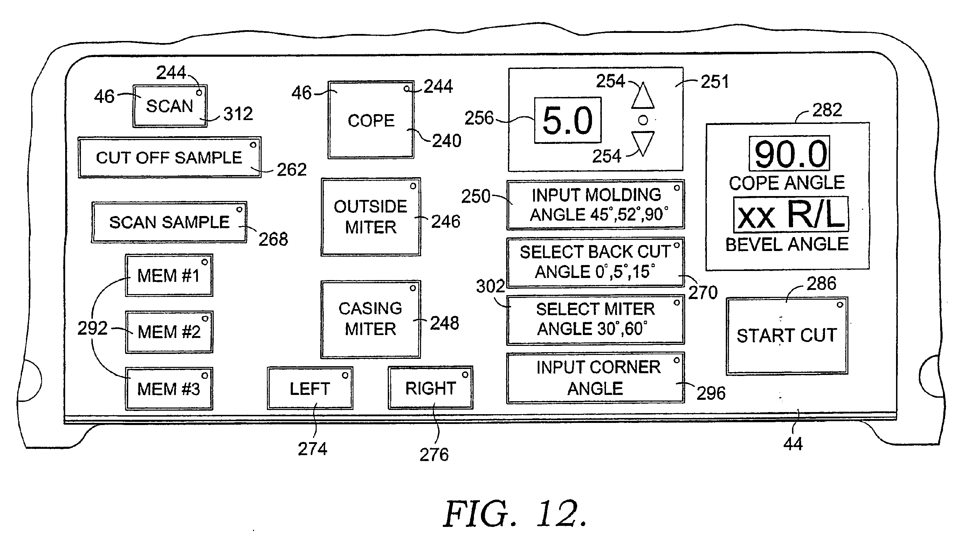

FIG. 12 illustrates an example of the control panel 44 with a plurality of buttons 46 thereon as one possible method of interacting with the computing device 194 of the cutting apparatus 10.

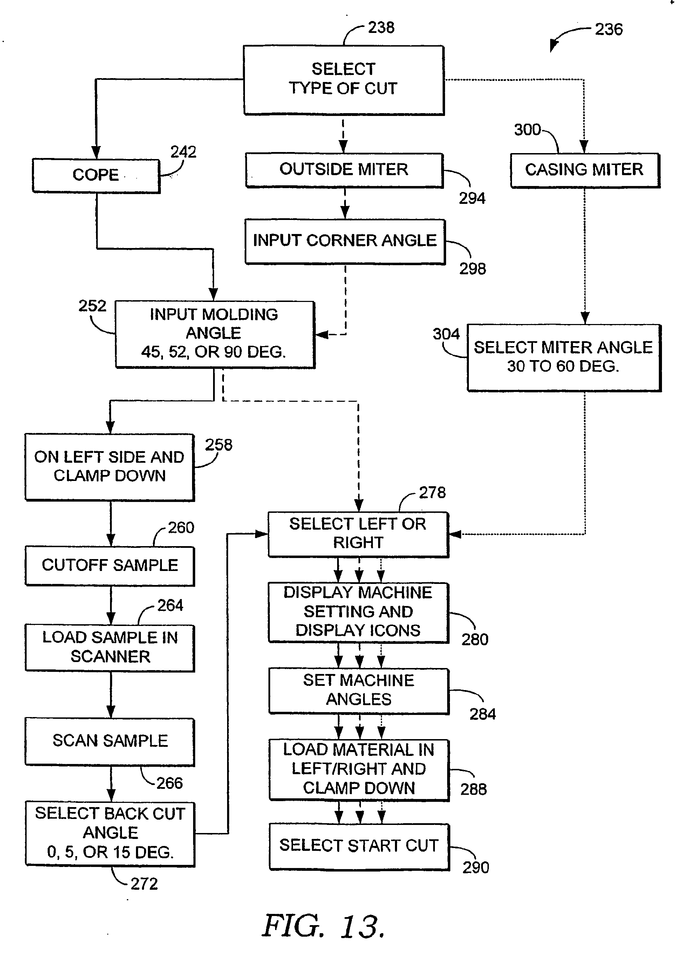

FIG. 13 illustrates a method 236 of cutting a workpiece in accordance with an embodiment of the present invention. At step 238, the user selects the type of cut desired to be made. If the user wishes to make a cope cut, the user presses the cope button 240 at step 242. The user can be prompted by the control panel 44 to perform the step 238 of selecting a type of cut in a variety of different ways. For example, in the illustrated embodiment, a number of the buttons 46 include an indicator 244 thereon, to visually alert the user of the next step to take. For example, in the illustrated embodiment, the indicator 244 is preferably an LED capable of emitting either a red or green light. Accordingly, at step 238 the computing device 194 energizes the indicators 244 on the buttons 46 which are possible choices. In other words, the indicators 244 on the cope button 240, an outside miter button 246 and a casing miter button 248 would all be emitting red light. The user would then know to push one of the three buttons 240, 246 or 248 at step 238 to start the steps necessary to achieve the desired result.

Once the user has pushed the cope button 240, the indicator 244 thereon turns green and the indicators on the outside miter button 246 and the casing miter 248 turn off. The indicators 244 on an input molding angle button 250 and an input button 251 would be energized red and the user would know to input the angle of the molding to be coped at step 252. The user would then press up or down adjustment buttons 254 to increase or decrease, respectively, the number shown in a display 256 of the input button 251. Once the number on the display 256 matches the angle of the molding, the user would press the input molding angle button 250 and the indicator 244 on button 250 would turn green and the indicator 244 on input button 251 would turn off. -

If the profile of the molding or workpiece 18 being cut is not already stored in a memory component of the computing device 194, the user would need to next scan the profile of the workpiece 18. Accordingly, the user would, at step 258, place the workpiece 18 to be coped on the left side of work surface 32 up against the fence 40 and clamp the workpiece 18 down with the left clamp 42 to cut a sample portion 176. The user would then cut off a sample portion 176 at step 260 by pressing a cutoff sample button 262. Computing device 194 would then activate the motor 158 to rotate the cutting blade 160. The cutting blade 160 should be in a vertical orientation (i.e., no back cut angle or bevel angle) to make a straight cut through the workpiece 18 as the X-stepper motor 84 moves the first carriage 68 and turn the cutting blade 160 toward the front 48 of the apparatus 10. It should be noted that the sample portion 176 could be obtained from the workpiece 18 by using a separate device, such as a powered miter saw, and steps 258 and 260 could be skipped.

The sample portion 176 is placed on the sled 174 at step 264. At step 266 the sample portion 176 is scanned by the scanner 20 once the user presses a scan sample button 268. The resulting profile of the sample portion 176 and in turn the workpiece 18 is then stored in a memory component of the computing device 194.

Upon completion of the scan, the indicator 244 on a select back cut angle button 270 and the indicator 244 on the input button 251 are energized red. The user then inputs the back cut angle at step 272 by way of the adjustment buttons 254. Once the display 256 indicates the appropriate back cut angle, the user presses the select back cut angle button 270 and the indicator 244 thereon is changed to green. The computing device 194 then sends signals to a left button 274 and a right button 276 to energize their indicators to red. At step 278, the user informs the computing device 194 whether the desired cut will be on the right end or the left end of the workpiece 18 by pressing either the left button 274 or the right button 276. Once the button 274 or 276 is pressed, the indicator 244 on that button goes green and the indicator on the other button turns off.

At step 280, the apparatus 10 displays the settings for the cut in display 282. At step 284, user sets the machine angles. In the illustrated embodiment, the angles, namely the cope angle and the back cut angle, are manually set by adjusting the bolts 142 and 116, respectively, of the adjustable coupling mechanism 114. It is within the scope of the present invention to provide encoders or axis sensors to provide closed loop feedback to the end user and/or control system to be sure axes angles are set properly before starting a cut. It is also well within the scope of the present invention to, in an alternate embodiment, automatically set the machine angles by way of entering the appropriate information into the computing device 194 via the control panel 44 such that the computing device 194 controls motors (not shown) which move the support 16 to place the cutting member 14 in the desired orientation.

Once the machine settings are displayed at step 280, the indicator 244 on a start cut button 286 is energized red to indicate the device is ready to make the cut. This indication lets the user know to set the machine angles at step 284 and load the workpiece 18 for cutting. At step 288, the workpiece or molding 18 to be cut is placed on the work surface 32 in the desired orientation to make the left or right cut as previously indicated, and clamped down to the work surface 32 while abutting the fence 40 with one of the clamps 42. Once the workpiece 18 is clamped down, the user presses the start cut button 286 at step 290 and the computing device 194 initiates and controls the cutting sequence as described above. Once the cut is complete, the cutting member 14 is returned to its rest position where the cutting blade 160 is rearward of the fence 40.

The control panel 44 also preferably includes a plurality of memory buttons 292 which can be used to store scanned profiles and/or settings separately or in combination with one another. For example, one of the memory buttons 292 could be pressed after step 290 above to store all of the settings and the profile of the workpiece that was cut. In the future, when the user desires to make a similar cut on a workpiece 18 having the same profile, the user can simply press that same memory button 292 and the computing device 194 will "fill in" all of the settings and recall a profile of that particular workpiece from memory. The user could then simply set the machine angles, put the workpiece 18 on the apparatus, and push the start button 286. Alternatively, a memory button 292 could be pressed at the beginning of a scan sequence to store only the profile, as discussed in greater detail below.

If the user desires to make an outside miter cut at step 238, the user presses the outside miter button 246 at step 294. Once the user presses the outside miter button 246, the indicator 244 thereon preferably turns green and indicators 244 on an input corner angle button 296 and on the input button 251 turn red. Once the user has input the angle of the corner around which the molding is to be installed by way of the adjustment buttons 254, so that the corner angle is displayed in the display 256, the user presses, at step 298, the input corner angle button 296 and the indicator 244 thereon turns green. Simultaneously the indicators 244 on input molding angle button 250 and input button 251 turn red. Once the user has input the molding angle by way of the adjustment buttons 254, so that the molding angle is displayed in display 256, the user presses, at step 252, the input molding angle button 250 and the indicator 244 thereon turns green and the indicator 244 on the input button 251 turns off. The user then selects a left or right cut at step 278. With all of the appropriate settings displayed at step 280, the user sets the machine angles at 284 and loads the material at 288. The user initiates the cut by pressing the start cut button 286 at step 290.

In addition to the ability to cut cope cuts and outside miter cuts, the apparatus 10 also has the ability to cut casing miter cuts, such as those necessary for framing around a window or door. If the user desires to cut a casing miter joint at step 238, the user would press the casing miter button 248 at step 300. In the illustrated embodiment, upon pressing the casing miter button 248, the indicator 244 thereon would turn from red to green, the indicators 244 on the cope button 240 and the outside miter button 246 would turn off, and the indicators 244 on the input button 251 and on a select miter angle button 302 would turn red. Once the display 256 shows the proper miter angle as input by the user via the adjustment buttons 254, the user presses the select miter angle button 302 at step 304. From this point, the user selects whether a left or right cut is desired at step 278 and proceeds through the remaining steps, as discussed above and as illustrated at Fig. 13.

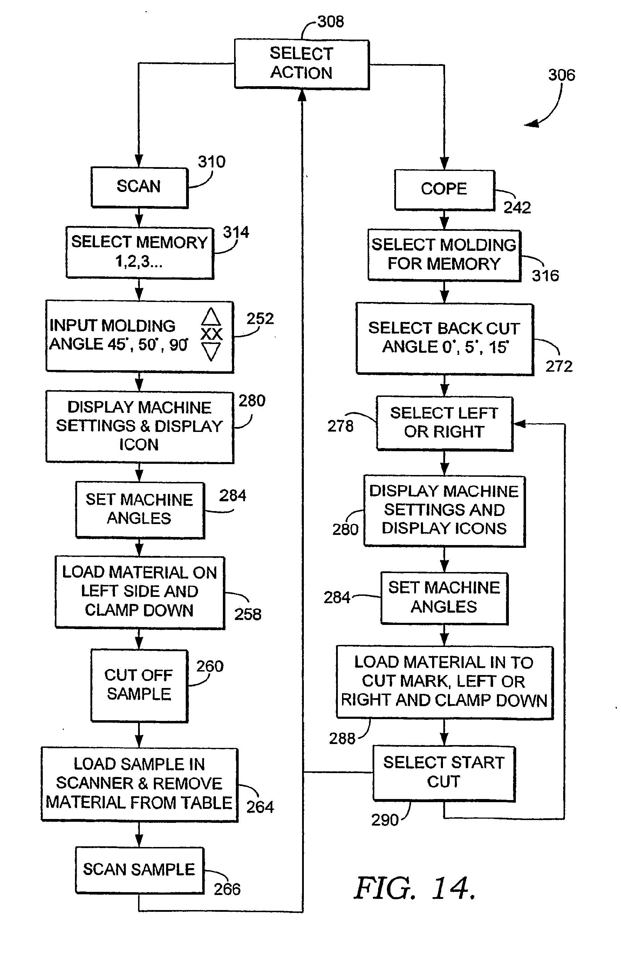

Fig. 14 illustrates an alternate method 306 of cutting a workpiece with the apparatus 10. In this method 306, the user selects an action at step 308. This is similar to the select type of cut step 238 and the steps for cutting an outside miter or a casing miter, which are illustrated in Fig. 13, could easily be added to Fig. 14. If no molding profiles or settings are stored in memory, the user would elect to scan a workpiece 18 at step 310 by pressing a scan button 312. As discussed above, to inform the user of the information desired from the user, an indicator 244 could be used on the scan button 312. At step 308, the indicators 244 on the scan button 312, the cope button 240, the outside miter button 246 and the casing miter button 248 could all be energized red. Once the user presses the scan button 312 in step 310, the indicator thereon would turn to green and the other three indicators would turn off. Additionally, the indicators 244 on the memory buttons 292 would turn red to inform the user to select a memory at step 314 by pressing one of the memory buttons 292. Upon pressing one of the memory buttons, the indicator 244 on the memory button 292 that was pressed would turn green, indicators on the other memory buttons would turn off, and the indicators 242 on the input molding angle button 250 and the input button 251 would turn red.

Once the user has selected the memory button 292 at step 314, the process for scanning the profile of a workpiece generally follows the steps described in greater detail above and as illustrated in Fig. 14. Once the sample portion 176 has been scanned at step 266, the apparatus 10 returns to the select action step 308 for input from the user. If the user then desires to cope a piece of molding having a profile which was just scanned and stored in a memory component of the computing device 194, the user presses the cope button 240 at step 242. In step 316, the user selects the molding from memory by pressing the appropriate memory button 292. At this point, the user selects the back cut angle at step 272 and follows the remaining steps illustrated in Fig. 14 to make a cope cut, as described in greater detail above. Once the cope cut is made, the apparatus 10 could be configured to default to making repeated cuts on the same molding 18 until informed otherwise, as opposed to simply returning to a select action step 308. This would allow a user to skip a large number of the steps when working on a project that uses the same molding throughout. In this arrangement, and as illustrated in Fig. 14, the control panel 44 would inform the user to select a left or right cut at 278 upon completion of the previous cut.

FIG. 15 illustrates an alternate method of obtaining information from the user regarding the desired cut. This method incorporates an alternate graphical user interface that would be located on the control panel 44 in addition to some of the buttons 46 that were discussed above. In this embodiment there is provided a display 318 with six buttons 46 thereon. Each button 46 has an icon 320 thereon that graphically illustrates the desired cut. In use, the user could then inform the computing devise 194 that the user wishes to make a left cope cut by simply pressing one button, namely the button with the left cope icon thereon. In the illustration depicted in Fig. 15, the appropriate button 46 would be the upper left button, which is in the cope row and the left column. The other required information could be input in the manner described above.

As one skilled in the art will appreciate, the computing device 194 disclosed herein could be any type of computing device capable of performing the disclosed functions. As readily understood, the computing device 194 includes a processor and a memory component. The memory component can store data momentarily, temporarily, or permanently and can be of any type known in the art.

Many variations can be made to the illustrated embodiment of the present invention without departing from the scope of the present invention. Such modifications are within the scope of the present invention. For example, while the user is notified of the steps of the desired information in the illustrated embodiment by way of the indicators 244 on the buttons46, an additional display device could be placed on the control panel 44, such as an LCD, to convey instructions to the user and to indicate the particular information requested at each step. Other modifications would be readily apparent to one of ordinary skill in the art, but would not depart from the scope of the present invention.

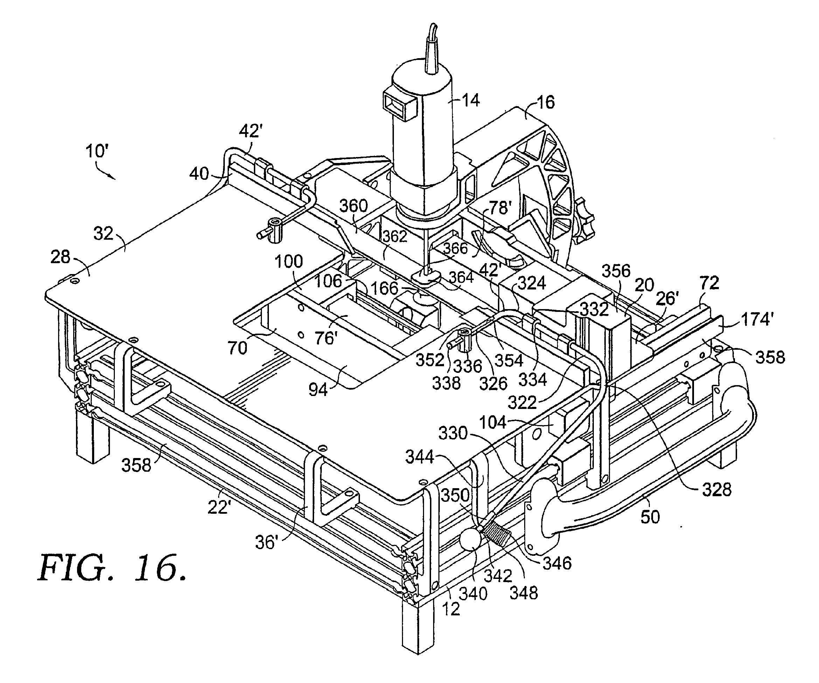

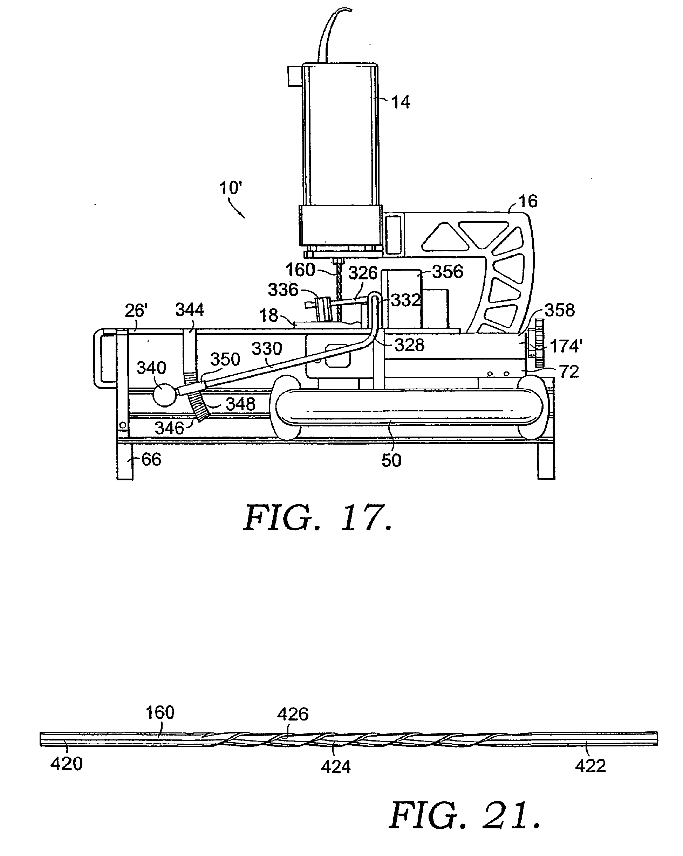

For example, Figs. 16 and 17 illustrate an alternate or second embodiment of a cutting apparatus 10' of the present invention. Because the cutting apparatus 10' of this alternate embodiment includes many of the same elements as discussed above, the elements of the alternate embodiment will be referenced by the numerals given above in connection with the above discussed embodiment. However, in the event that an element of the alternate embodiment is modified from the corresponding element of the previous embodiment, the reference numeral will be followed by a prime mark.

The apparatus 10' is illustrated in Figs. 16 and 17 with the housing 24' removed. Alternatively, the apparatus 10' could be used without the housing and as substantially illustrated. The apparatus 10' includes modified hold downs or clamps 42'. The clamps 42' of this alternate embodiment have been designed to provide a lower profile than the clamps 42 previously disclosed so that they do not interfere with the operation of the cutting member 14 when a desired cut requires the cutting member 14 to be tilted to one side or another to accommodate a large bevel angle. The hold down 42' includes a rod 322 with a first bend 324 to provide a clamp arm 326 and a second bend 328 to provide a lever arm 330. The rod 322 is mounted to the apparatus 10' via supports 332. The rod 322 passes through apertures 334 in the supports 332 to permit rotational movement of the rod 322 with respect to the supports 332.

A hold down pad 336 is provided on the clamp arm 326 adjacent a distal end 338 thereof. The hold down pad 336 is movable along the length of the clamp arm 326 to permit the user to place the hold down pad 336 in the best location for holding down a workpiece 18 with a particular profile.

A user engagable knob 340 is provided at a distal end 342 of the lever arm 330 to permit the user to move the clamp arm 326 between a raised position, for positioning a workpiece 18 on the work surface 32, and a clamping position, as illustrated in Fig. 17 for holding a workpiece 18 during operation of the apparatus 10'.

A bracket 344 extends downwardly from the work surface 32 and includes an arcuate section 346 having a plurality of transverse grooves in an outer surface thereof to provide teeth 348. A sleeve 350 is positioned on the rod 322 adjacent the knob 340. Sleeve 350 includes a longitudinal rib extended outwardly therefrom that provides a pawl (not shown) for selective engagement with the teeth 348.

In use, the operator raises the lever arm 330 up towards the work surface 32 to increase the distance between the hold down pad 336 and the work surface 32 to permit a workpiece 32 to be cut to be placed adjacent the fence 40 and underneath the clamp arm 326 of the hold down 42'. Once the workpiece 18 is in the desired location, the user pushes downward on the knob 340 to rotate the hold down pad 336 into engagement with an upper surface of the workpiece 18. If needed, the user can move the hold down pad 336 along the clamp arm 326 to position the hold down pad so that it abuts the workpiece 18 in a desired location. Once the hold down pad 336 is in the desired location, the user can secure the position of the hold down clamp 336 on the clamp arm 326 by tightening a screw 352 which presses against a flattened portion 354 of the rod 322. The screw 352 could have a user engagable knob similar to knob 118.

Once the hold down pad 336 is in contact with the upper surface of the workpiece 18, the user can rotate the lever arm 330 further downward to clamp the workpiece 18 against the work surface 32. The additional downward movement of the lever arm 330 causes the rod 322 to twist and act like a spring to provide the hold down force of the clamp 42'. The further the lever arm 330 is moved downward, the greater the hold down pressure provided by the clamp 42'. When the user has reached the desired clamping pressure, the user engages the pawl of the sleeve 350 with the adjacent teeth 348 of the arcuate section 346. The pawl and teeth 348 cooperate to hold the lever arm 330, and turn the clamp arm 326, in place during operation of the apparatus 10'. Once the cut has been made, the user can remove the workpiece 18 by disengaging the pawl from the teeth 348.

The second embodiment 10' also discloses a number of other modifications or alterations from the first embodiment. For example, the scanner 20 is positioned within and protected by a housing 356. An opening (not shown) is provided in the plate member 26' through which the scanner 20 may read the profile of the sample portion 176 as it passes there below. The sled 174' in the second embodiment is provided with an outer sidewall 358 for ensuring that the sample portion 176 remains on the sled 174 during the scanning process.

The second embodiment also shows the use of extruded members 358 to form the base frame 22'. The extruded members could be extruded aluminum to lighten the weight of the apparatus 10'. The extruded members 358 could also be used as the front and rear arms 76', 78' of the first carriage 68. The extruded members 358 naturally provide channels therein for guiding sliding members as well as attaching non-sliding members, such as brackets 36'.

Lastly, the second embodiment of the apparatus 10' discloses a cutting blade and workpiece support 360. The support 360 is coupled with the second carriage 70 and spans between the right and left cross arms 90, 92. The support includes a crossbar 362, positioned on the second carriage 70 such that it travels underneath the work surface 32 during use, and a U-shaped guide 364 positioned on top of and at the center of the crossbar 362. An upper surface 366 of the guide 364 is preferably in the same plane as or slightly below the upper surface 28 of the work surface 32.

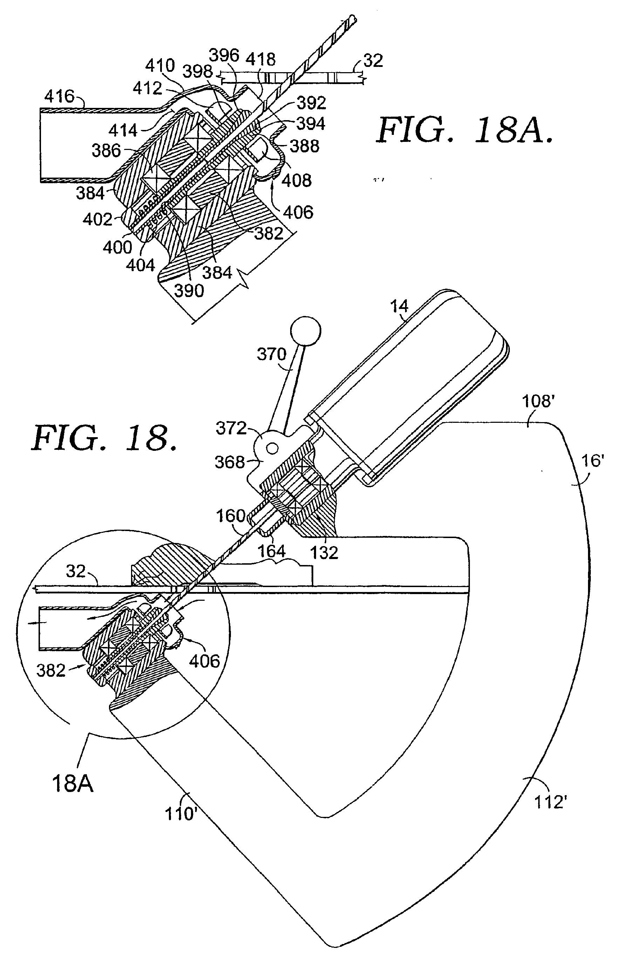

Fig. 18 discloses an alternate embodiment of a support 16'. In this embodiment, the collar 169 and screws 168 for coupling the cutting member 14 with support 16 have been replaced with a clamping mechanism 368 for selectively and releasably coupling the cutting member 14 with the support 16'. The clamping mechanism 368 includes a lever 370 coupled with a clamp body 372 to provide a quick release motor mount to permit the user to quickly and selectively remove the motor 14 from the cutting apparatus 10 so that the motor 14 can be used freehand or in another tool configuration.

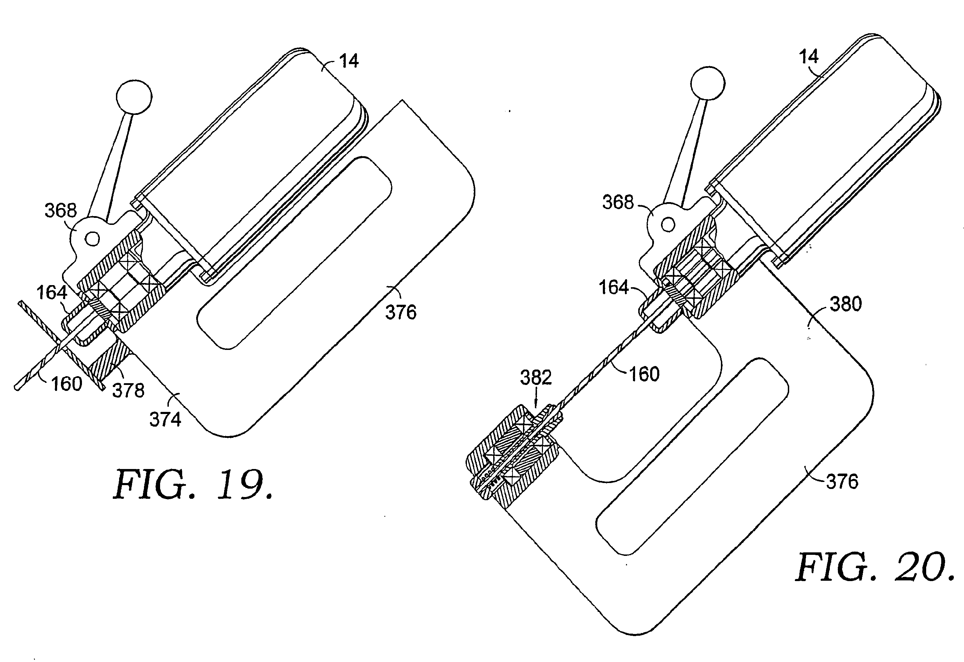

In that regard, Fig. 19 illustrates that the cutting member 14, once removed from the apparatus 10, can be mounted in a cutout tool base 374 having a grip handle 376 and an adjustable depth guide/guard 378. In this arrangement, the cutting blade 160 would be a standard single shanked rotary saw cutout tool type blade 160. Fig. 20 illustrates a cutting member 14 placed in a handheld C-shaped frame 380. The frame 380 is similar to the C-shaped support 16 but is smaller and designed to be handheld by a user to permit hand trimming or nibbling of work pieces 18. Both of these fixtures 374, 380 include the clamping member 368. The upper collet 164 remains with the cutting member 14 and can be used to hold either of the cutting blades 160.

Fig. 18 also illustrates an alternate embodiment of the lower collet 166, as best viewed in Fig. 18A. In the first embodiment of the apparatus 10, the upper and lower collets 164, 166 were standard collets that require wrenches to tighten. While that arrangement certainly works, the positioning of the lower collet 166 below the work surface 32 limits access to the lower collet 166 and can make the use of wrenches for tightening the lower the collet 166 difficult. Accordingly, Figs. 18 and 18A disclose a tool-less pushbutton collet 382 which replaces the lower collet 166 described above. As discussed above, when the cutting blade 160 is a double shank rotating cutting blade 160, it is held on both ends by collets. The upper collet 164 is integral to the motor drive and thus transmits torque from the motor 158 to the cutting blade 160 while also holding and defining the cutting blade's axis of rotation. The lower collet 166, 282 defines the same axis of rotation while also providing needed radial support to the cantilevered cutting blade 160. While the upper collet 164 must be adequately tightened to transmit torque to the cutting blade 160, the lower collet does not need to transmit torque but only needs to provide radial support.

The tool-less, pushbutton collet 382 includes an annular housing 384 that is coupled with a distal end of the lower arm 110' of the support 16'. Bearings 386 are provided inside the housing 384 and rotatably support a collet holder 388. The collet holder 388 is generally cylindrical in shape and includes a longitudinal bore 390 therethrough. The bore 390 includes a flared portion 392 adjacent the upper end 394 of the collet holder 388 for receiving a tapered portion 396 of a collet member 398. The collet member 398 is elongate in nature and is received in the longitudinal bore 390 of the collet holder 388. The collet member 398 has a central longitudinal bore 400 "therethrough and has a user engagable button 402 opposite the taper portion 396. A spring 404 surrounds a portion of the collet member 398 and is positioned between the button 402 and the collet holder 388 to bias the collet member 398 into seating engagement with the collet holder 388.

To install a new cutting blade 160, the cutting blade 160 is positioned in the longitudinal bore 400 through its opening in the button 402. The cutting blade 160 is pushed into and through the pushbutton collet 382 until the upper shank thereof reaches and is received in the upper collet 164. The upper collet 164 is tightened via wrenches on one of the shanks of the cutting blade 160 to ensure that the upper collet 164 transmits the torque of the motor 158 to the cutting blade 160. When the button 402 is released, the spring 404 in the pushbutton collet 382 pulls the tapered portion 396 of the collet member 398 into the flared portion 392 of the collet holder 388, thereby pinching the lower shank of the cutting blade 160 therein and centering the cutting blade 160 on its axis of rotation and preventing radial movement of the lower end of the cutting blade 160.

Figs. 18 and 18A also disclose a dust collection system 406. As discussed in greater detail below, the downward cutting helical design of the cutting blade 160 by itself efficiently removes sawdust from the cutting area during operation. However, improved dust collection or handling can be achieved by providing the dust collection system 406 having a centrifugal fan 408 and a dust shroud 410.

During operation, the cylindrical collet holder 388 of the pushbutton collet 382 rotates with the cutting blade 160 in the bearings 386. By attaching a plurality of blades 412 to the outer surface of the collet holder 388, rotation of the cutting blade 160 causes the blades 412 to rotate about the central longitudinal axis of the cutting blade 160, thereby creating the centrifugal fan 408. By placing the dust shroud 410 around the centrifugal fan 408, airflow can be directed from the blades 412 through an airflow passage 414 to a discharge tube 416, as illustrated by an arrow in Fig. 18. The flow of air through the passage 414 and the discharge tube 416 creates a vacuum around the centrifugal fan 408 that draws air into the dust shroud 410 through an inlet opening 418 adjacent the cutting blade 160, as also illustrated by arrows in Fig. 18. During operation, the opening 418 of the dust shroud 410 is positioned directly under the work surface 32 so that saw dust from the cutting operation is pulled into and forced through the dust shroud 410.

The downward spiral configuration of the cutting blade 160 and gravity work together to start moving the saw dust from the cutting operation in a downward direction. While this arrangement may provide sufficient dust handling for certain operations, the centrifugal fan 408 of the dust collection system 406 creates a downward airflow that draws the saw dust through the dust shroud 410 and expels it out the discharge tube 416 for improved dust handling capabilities. While the saw dust expelled from the discharge tube 416 can be left to simply fall out the bottom of the apparatus 10 and collect in a pile, the discharge tube 416 can be configured to have a hose of a vacuum or a simple dust bag connected thereto. To facilitate such a connection, the discharge tube 416 could be circular with the industry standard one inch outside diameter for connection to a vacuum or dust bag.

As discussed above, the cutting blade 160 is preferably a double shanked downward cutting spiral bit. In that regard, Fig. 21 illustrates a proposed cutting blade of the present invention. Cutting blade 160 includes a first shank portion 420 adjacent one end of the cutting blade 160 and a second shank portion 422 adjacent the opposite end of cutting blade 160. A cutting portion 424 is provided intermediate the shank portions 420, 422. The cutting portion 424 can be of a single or double flute design. However, double flute geometry has been found to provide a stiffer cross-section as the size of the cutting gullet may be reduced, thereby increasing the amount of material in the center of the bit 160. The cutting gullets 426 are preferably helical in nature and can be a continuous S-curve for ease of parabolic grinding of the gullet 426 and corresponding flute. As discussed above, helical downward cutting has been found beneficial in the cutting apparatus 10 as it provides for a clean and good quality cut on the top surface of the workpiece 18 being cut. The helical downward cutting has also been found to improve visibility and dust collection as it moves saw dust down from the upper visible surface of the workpiece 18 and discharges it below the work surface 32.

While a conventional single shanked rotary saw bit could be used in the cutting member 14 of the apparatus 10, the double shank cutting blade 160 has been found to provide superior rigidity and less deflection than a single shank cutting blade of comparable diameter by virtue of the fact that the double shank design provides for support on both ends of the cutting blade. The improved support and stiffness permits decreasing the diameter of the cutting blade 160. In that regard, the cutting blade can be made to have an industry standard 1/8 inch diameter so that the upper collet 164 could be a readily available item. The smaller diameter of the cutting blade 160 permits the apparatus 10 to cut finer details in intricate moldings and workpieces 18. Additionally, the increased stiffness provided by the double collet arrangement has been found to result in a longer blade life.

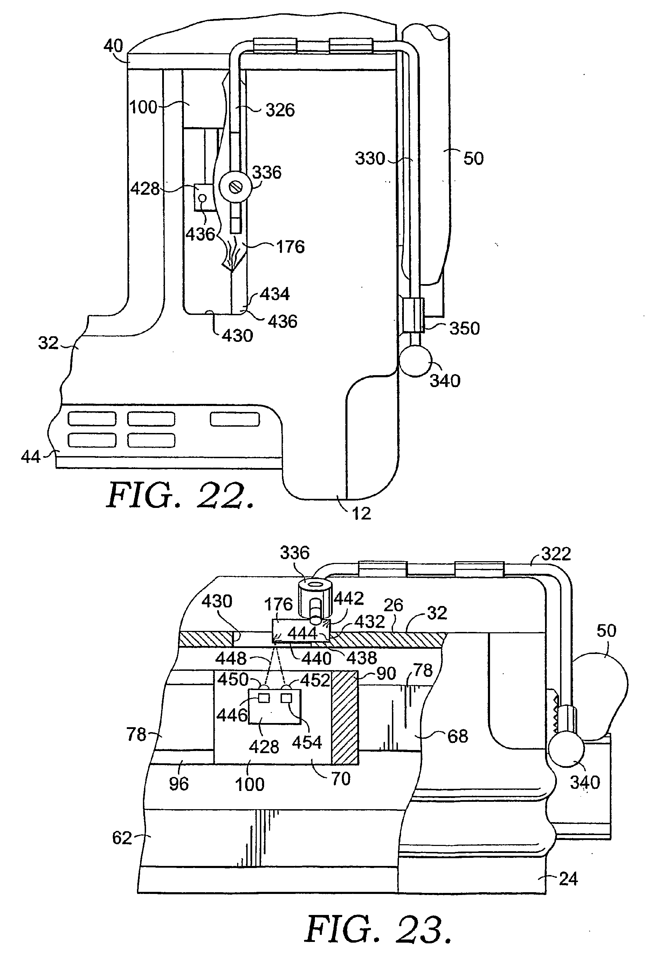

In addition to the scanner 20 discussed above, Figs. 22-23 illustrate an alternate scanning arrangement. In this arrangement, a scanner 428 is positioned below the work surface 32. An opening 430 is formed in the plate member 26. The opening 430 includes a rabbit 432 to provide a ledge 434 with an upper surface 436. A sample portion 176 of the molding or workpiece 18 to be cut is placed in the opening 430, above the scanner 428, in an orientation such that a portion 438 of a cross-section profile or end 440 of the sample portion 176 rests on the upper surface 436 of the ledge 434, as illustrated in Fig. 23. In this arrangement, the end 440 of the sample portion 176 is generally parallel to and slightly below the plane of the work surface 32. Also, the sample portion 176 is oriented such that its longitudinal axis, which is the same as the longitudinal axis of the workpiece 18 from which it was cut, is perpendicular to the work surface 32.

The sample portion 176 is also oriented such that a rear surface 442 of the sample portion abuts a vertical wall 444 of the rabbit 432. This also orients the sample portion 176 such that the profile of the sample portion 176 is in near the middle of the opening 430. Looking at Fig. 22, in addition to being pushed to the right, the sample portion 176 is pushed up the page until it abuts the fence 40. Once the sample portion is firmly seated in the rabbit 432, the user clamps the sample portion 176 in place with the clamp 42'. The clamp 42' applies downward pressure directly over the ledge to hold the sample portion 176 in place in a cantilevered arrangement, as illustrated in Fig. 23.

The scanner 428 is then coupled with the second carriage 70 such that the X and Y stepper motors 84, 104 can move the scanner 428 back and forth underneath the sample portion 176 and along the edge of its profile during the scanning process to determine the profile of the workpiece 18.

The scanner 428 includes a light emitting diode 446 for emitting a beam 448 that is focused on the end 440 of the sample portion 176 positioned in the opening 430. The beam 448 is focused vertically upwards by a first lens 450 at a slight angle. A second lens 452 focuses the reflection of the beam off the end 440 of the sample portion 176 onto a photo detector or photo transistor sensor 454. The beam 448 is then used as an edge detection signal.

In that regard, the beam 448 is focused on the end 440 of the sample portion 176. The Y-stepper motor 104 is then activated until the beam 448 goes off the edge of the profile and is no longer reflected back into the sensor 454. The Y-stepper motor 104 is then reversed until it is detected that the beam 448 is focused back on the end 440 of the sample portion 176. The X-stepper motor 84 is then activated to move the scanner 428 forward and the process is repeated. In this manner, the Δ Z data for the profile of the workpiece 18 is developed from the position the Y-stepper motor 104 (and hence the scanner 428 on the second carriage 70) is in each time the edge of the profile is acquired. The detector 454 outputs a signal that is sent to an adjustable threshold comparator (not shown). The comparator then sends a signal to the computing device 194.

As a further modification, both the scanner 20 and the scanner 428 can be deployed with a synchronous detector scheme to make the scanner 20, 428 immune to interference from ambient light reflecting off the surface of the sample portion 176 during the scanning process.

Synchronous detection is a signal acquisition technique used to very effectively reject unwanted ambient or background "noise" while cleanly acquiring a desired signal. The technique is applicable to any type of signal source such as light, sound, magnetic, etc. that can be rapidly pulsed on and off, usually at a 50% duty cycle. In one embodiment of a synchronous detection system, and with reference to the scanner 20 of the first embodiment, the beam 210 is synchronously detected at a rate of approximately 5kHz, which is more than 10 times the variation rate of the beam 210 or existing light noise. The beam 210, preferably from a 950 nm infrared LED because of it's high efficiency, angularly impinges an approximately 0.7 mm focused spot of light 212 on the upper surface 214 of the sample portion 176. The LED 196 is turned on and off about 5000 times per second with a 50% duty cycle. Also impinging on the upper surface 214 of the sample portion 176 in the area of the 0.7mm focal point 212 of the beam 210 is noise light from various sources, such as fluorescent lights and daylight.

The scanner 20 operates in a closed loop where the Z-height is positionally maintained such that the focused spot or focal point 212 is always directly under the collecting lens 202 that focuses the beam 210 on the splitter 204 for a 50/50 split. Noise light undesirably collected in the vicinity of the spot 212 would not be uniform in position or intensity, thus leading to Z-height error when seeking a null difference signal from the splitter 204.

Synchronous detection can effectively cancel out the unwanted noise light-that undesirably makes its way past the beam splitter 204 to the two differencing photo-transistors 206, 208 whose outputs are subtracted to form the output signal from the scanner 20 to the computing device 194. Note that for any given circumstance, noise light will flood the spot area 212 at all times during operation of the apparatus 10.

Synchronous detection employs a sample and hold ("S&H") technique. In one embodiment, a S&H amplifier has a gating switch that can be closed to charge an input capacitor and opened to maintain that sampled voltage level until the next sample cycle. The S&H amplifier has high input impedance to prevent capacitor discharge between cycles. A total of four sample & hold amplifiers are connected to the differencing photo-transistors; two sample (Left) with LED On/Off, two sample (Right) with LED On/Off.

In use, an example of one cycle of an embodiment of a 5kHz synchronous detection system proceeds as follows:

The LED is turned ON; simultaneously two sampling switches (e.g., CMOS) close for 100 microseconds thus sampling the desired LED signal plus the unwanted noise difference signals from the two differencing photo-transistors. The LED is turned OFF; simultaneously two other sampling switches sample just the noise from the two differencing photo-transistors for 100 microseconds. Two inverting amplifiers then invert the left and right samples and the hold noise light signals which are added to the S&H signals that have the good signal plus the noise. The identical plus and minus noise signals cancel each other out and leave only the desired LED difference signal which is then the output of the scanner that is sent to the computing device.

It should be noted that it is assumed in the example that neither the noise or the desired difference signal changes during one clock-cycle of 200 microseconds. In this embodiment, the desired Z-height signal is in the low Hz range: Fluorescent lights flicker at 120 Hz with components at much higher frequencies that synchronous detection is able to effectively remove. The scheme is effective as long as the amplifiers, which are working in a linear range, are not saturated.

Also, in the example embodiment, the gating for the S&H amplifiers is bracketed at 70 microseconds in the middle of each 100 microseconds 1/2 cycle of LED On/Off illumination to generate safe switching margins. In addition some capacitive smoothing is accomplished at the output of the final 4-channel summing amplifier that subsequently feeds two decision comparators to generate the above and below null signal and the dead band at the null signal.

From the foregoing it will be seen that this invention is one well adapted to attain all ends and objects hereinabove set forth together with the other advantages which are obvious and which are inherent to the structure. It will be understood that certain features and subcombinations are of utility and may be employed without reference to other features and subcombinations. This is contemplated by and is within the scope of the invention.

## Claims

1. An apparatus for cutting a workpiece, the apparatus comprising:
a frame (22);
a first carriage (68) supported on the frame for movement with respect to the frame in a first direction;
a second carriage (70) supported on the first carriage for movement with respect to the frame in a second direction;
a motor (104) coupled with the second carriage;
a cutting blade (160) coupled with the motor for engaging and cutting the workpiece during operation of the apparatus;
means for determining a profile of the workpiece;
means for converting the determined profile of the workpiece into a corresponding path to be followed by the cutting blade; and
means for moving the cutting blade along the corresponding path to cut the workpiece in a desired manner;
**characterized in that** the means for converting the determined profile of the workpiece into a corresponding path to be followed by the cutting blade is adapted to determine variations in the profile of the workpiece in a third direction, perpendicular to said first direction and said second direction, and to control movement of the cutting blade along said first direction and said second direction.

2. The apparatus of claim 1, wherein the second direction is generally perpendicular to the first direction and wherein the means for determining the profile of the workpiece includes a scanner (20) for scanning the profile of the workpiece.

3. The apparatus of claim 2, wherein the means for converting the determined profile includes a computing device (194), wherein the means for moving the cutting blade includes a first motor (84) for moving the first carriage in the first direction, and wherein the computing device controls operation of the scanner and the first motor.

4. The apparatus of claim 3, wherein the means for moving the cutting blade further includes a second motor (104) for moving the second carriage in the second direction and wherein the computing device further controls operation of the second motor.

5. The apparatus of claim 3, wherein the scanner is an optical scanner and wherein the scanner includes a light source (196), a first lens (200) for focusing light from the light source onto a surface of the workpiece to be scanned, and a first sensor (206) for monitoring light reflected off of the surface of the workpiece.

6. The apparatus of claim 5, wherein the scanner further includes a second lens (202) for receiving light reflected off of the surface of the workpiece and focusing the received light, a beam splitter (204) for splitting light from the second lens, and a second sensor (208), wherein a portion of the light from the beam splitter is received by the first sensor, wherein a portion of the light from the beam splitter is received by the second sensor, wherein the sensors translate the received light into signals and send the signals to the computing device, and wherein the computing device compares the signals from the sensors.

7. The apparatus of claim 6, wherein the scanner further includes a scanner motor (186) for moving the scanner toward and away from the workpiece during the scanning process, wherein the computing device controls movement of the scanner via the scanner motor, and wherein the computing device moves the scanner toward and away from the workpiece during the scanning process in response to the results of the comparison of the signals from the sensors to maintain a portion of the scanner a constant distance from the surface of the workpiece being scanned.

8. The apparatus of claim 1, further comprising:
a scanner (20) for determining a profile of the workpiece; and a computing device (194) for controlling operation of the apparatus.

9. The apparatus of claim 8, wherein the first carriage includes a sled (174) for supporting a sample portion of the workpiece to be cut, wherein movement of the first carriage moves the sled, and wherein the scanner is positioned adjacent the sled, whereby movement of the first carriage moves the sled under the scanner to permit the scanner to determine the profile of the workpiece.

10. The apparatus of claim 8, wherein the scanner is an optical scanner, wherein the profile of the workpiece is stored in a memory component of the computing device, and wherein the computing device controls movement of the first and second carriages to move the cutting blade through the workpiece in a cutting path which corresponds with the profile of the workpiece.

11. The apparatus of claim 1, wherein the motor is coupled with the second carriage via a support, wherein the support is coupled with the second carriage via an adjustable coupling mechanism (114), and wherein the adjustable coupling mechanism permits a user to selectively change the orientation of the cutting blade with respect to the frame to perform various types of cuts in a plurality of workpieces with different profiles.

12. The apparatus of claim 11, wherein the adjustable coupling mechanism includes means for adjusting a forward tilt angle and means for adjusting a side to side angle and wherein the means for adjusting a side to side angle is operationally independent from the means for adjusting a forward tilt angle, whereby a user may adjust the side to side angle without adjusting the forward tilt angle.

13. The apparatus of claim 11, wherein the cutting blade is a spiral cutting bit having an upper end and a lower end, wherein each end includes a shank (420, 422), wherein the shank of the upper end of the cutting bit is coupled with the motor, and wherein the shank of the lower end of the cutting bit is coupled with the support.

14. A method of cutting a workpiece comprising:
scanning a profile of the workpiece desired to be cut;
storing data corresponding to the profile of the workpiece in a memory component of a computing device; and converting the data corresponding to the profile of the workpiece into movements of a cutting member of a cutting apparatus;
**characterized in that** converting the data corresponding to the profile of the workpiece into movements of the cutting member comprises determining variations in the profile of the workpiece in a third direction, perpendicular to a first direction and a second direction, and controlling movement of the cutting member along said first direction and said second direction.

15. The method of claim 14 using an optical scanner, the method comprising:
placing the workpiece adjacent the scanner,
emitting a light from the scanner onto a surface of the workpiece;
moving one of the scanner and the workpiece with respect to the other, whereby the light moves across the surface of the workpiece; and measuring the intensity of the light as it is reflected off of the surface of the workpiece as the light moves across the surface.

16. The method of claim 15 further comprising:
moving the scanner with respect to the surface of the workpiece in response to changes in the intensity of the light reflected off of the surface, wherein a portion of the scanner maintains a constant distance from the surface of the workpiece as the light moves across the surface of the workpiece.

17. The method of claim 15, wherein measuring the intensity of the light includes:
converting the measurement of the intensity of light reflected off of the surface of the workpiece into one or more signals; and computing a difference in signal strength between two or more of said signals,

18. The method of claim 15, wherein measuring the intensity of the light includes:
receiving at least a portion of the light reflected off of the surface of the workpiece;
splitting at least a portion of the received light;
directing the split light onto a plurality of detectors;
translating the intensity of the light received by the detectors into one or more signals;and
calculating changes in signal strength between the signals.

19. The method of any one of claims 14 to 18 for cutting a workpiece with a cutting apparatus having a cutting member operably and movably coupled with a base, wherein the cutting apparatus includes a computing device for controlling operation of the cutting apparatus and a control panel to permit a user to interface with the apparatus, the method comprising:
placing the workpiece on the base;
selecting a type of cut to be performed on the workpiece via the control panel;
adjusting the orientation of the cutting member with respect to the base as a result of the type of cut selected to be performed on the workpiece;
displaying information regarding the type of cut to be performed on a display; and
initiating the cut using the control panel.

20. The method of claim 19, further comprising:
moving the cutting member with respect to the base through a cutting path, wherein the cutting path is related to a profile of the workpiece being cut.

21. The method of any one of claims 14 to 20 for directing a user to provide desirable information for cutting a workpiece with a cutting apparatus having a cutting member operably and movably coupled with a base,
wherein the cutting apparatus includes a computing device for controlling operation of the cutting apparatus and a control panel to permit a user to interface with the apparatus, the method comprising:
providing for the requesting of an indication of an option to be selected from a set of options; providing for the receipt of an indication of an option selected from a set of options; and
providing for presenting an indication of an option previously selected from a set of options.

22. The method of claim 21, wherein the providing for the receipt of an indication of an option selected from a set of options includes providing buttons on the control panel.

23. The method of claim 21, wherein the providing for presenting an indication of an option previously selected from a set of options includes providing for displaying information regarding the type of cut to be performed on a display.

24. The method of claim 21, wherein the set of options include types of cuts desired to be performed on the workpiece.

## Patentansprüche

1. Vorrichtung zum Schneiden eines Werkstücks, wobei die Vorrichtung aufweist:
einen Rahmen (22);
einen ersten Wagen (68), getragen vom Rahmen zur Bewegung hinsichtlich des Rahmens in einer ersten Richtung;
einen zweiten Wagen (70), getragen vom ersten Wagen zur Bewegung hinsichtlich des Rahmens in einer zweiten Richtung;
einen Motor (104), gekoppelt an den zweiten Wagen;
eine Schneidklinge (160), gekoppelt an den Motor zum Greifen und Schneiden des Werkstücks während des Betriebs der Vorrichtung;
Mittel zum Bestimmen eines Profils des Werkstücks;
Mittel zum Umrechnen des bestimmten Profils des Werkstücks in eine entsprechende Bahn, der die Schneidklinge folgen muss; und
Mittel zum Bewegen der Schneidklinge entlang der entsprechenden Bahn, um das Werkstück auf gewünschte Weise zu schneiden;
**dadurch gekennzeichnet, dass** die Mittel zum Umrechnen des bestimmten Profils des Werkstücks in eine entsprechende Bahn, der die Schneidklinge folgen muss, angepasst ist, um Variationen im Profil des Werkstücks in eine dritte Richtung, rechtwinklig zur besagten ersten Richtung und zur besagten zweiten Richtung, zu bestimmen und die Bewegung der Schneidklinge entlang der besagten ersten Richtung und der besagten zweiten Richtung zu steuern.

2. Vorrichtung nach Anspruch 1, wobei die zweite Richtung allgemein rechtwinklig zur ersten Richtung verläuft und wobei die Mittel zum Bestimmen des Profils des Werkstücks einen Scanner (20) zum Scannen des Profils des Werkstücks enthalten.

3. Vorrichtung nach Anspruch 2, wobei die Mittel zum Umrechnen des bestimmten Profils eine Rechenvorrichtung (194) enthalten, die Mittel zum Bewegen der Schneidklinge und einen ersten Motor (84) zum Bewegen des ersten Wagens in die erste Richtung enthalten und die Rechenvorrichtung den Betrieb des Scanners und des ersten Motors steuert.

4. Vorrichtung nach Anspruch 3, wobei die Mittel zum Bewegen der Schneidklinge ferner einen zweiten Motor (104) zum Bewegen des zweiten Wagens in die zweite Richtung enthalten und die Rechenvorrichtung ferner den Betrieb des zweiten Motors steuert.

5. Vorrichtung nach Anspruch 3, wobei der Scanner ein optischer Scanner ist und der Scanner eine Lichtquelle (196), eine erste Linse (200) zum Fokussieren von Licht von der Lichtquelle auf eine Fläche des zu scannenden Werkstücks und einen ersten Sensor (206) zum Überwachen des von der Fläche des Werkstücks reflektierten Lichts enthält.

6. Vorrichtung nach Anspruch 5, wobei der Scanner ferner eine zweite Linse (202) zum Empfangen des von der Fläche des Werkstücks reflektierten Lichts und zum Fokussieren des empfangenen Lichts, einen Strahlteiler (204) zum Aufteilen des Lichts von der zweiten Linse und einen zweiten Sensor (208) enthält, wobei ein Teil des Lichts des Strahlteilers vom ersten Sensor und ein Teil des Lichts des Strahlteilers vom zweiten Sensor empfangen wird, die Sensoren das empfangene Licht in Signale übertragen und die Signale an die Rechenvorrichtung senden und die Rechenvorrichtung die von den Sensoren kommenden Signale miteinander vergleicht.

7. Vorrichtung nach Anspruch 6, wobei der Scanner ferner einen Scannermotor (186) zum Bewegen des Scanners während des Scanvorgangs zum und vom Werkstück enthält, die Rechenvorrichtung die Bewegung des Scanners über den Scannermotor steuert und die Rechenvorrichtung den Scanner während des Scanvorgangs in Reaktion auf das Ergebnis des Vergleichs der von den Sensoren kommenden Signale zum und vom Werkstück bewegt, damit ein Teil des Scanners eine konstante Distanz zur Fläche des gescannten Werkstücks beibehält.

8. Vorrichtung nach Anspruch 1, ferner aufweisend:
einen Scanner (20) zum Bestimmen eines Profils des Werkstücks; und eine Rechenvorrichtung (194) zum Steuern des Betriebs der Vorrichtung.

9. Vorrichtung nach Anspruch 8, wobei der erste Wagen einen Schlitten (174) zum Tragen eines Probeteils des zu schneidenden Werkstücks enthält, die Bewegung des ersten Wagens den Schlitten bewegt und der Scanner neben dem Schlitten angebracht ist und die Bewegung des ersten Wagens den Schlitten unter den Scanner bewegt, um es dem Scanner zu ermöglichen, das Profil des Werkstücks zu bestimmen.

10. Vorrichtung nach Anspruch 8, wobei der Scanner ein optischer Scanner ist, das Profil des Werkstücks in einer Speicherkomponente der Rechenvorrichtung gespeichert wird und die Rechenvorrichtung die Bewegung des ersten und zweiten Wagens steuert, um die Schneidklinge des Werkstücks in einer Schneidebahn zu bewegen, die dem Profil des Werkstücks entspricht.

11. Vorrichtung nach Anspruch 1, wobei der Motor über einen Träger an den zweiten Wagen gekoppelt ist an, der Träger über einen einstellbaren Kupplungsmechanismus (114) an den zweiten Wagen gekoppelt ist und der einstellbare Kupplungsmechanismus es einem Benutzer ermöglicht, selektiv die Ausrichtung der Schneidklinge hinsichtlich des Rahmens zu ändern, um in einer Vielzahl von Werkstücken verschiedene Schnitttypen mit verschiedenen Profilen zu erhalten.

12. Vorrichtung nach Anspruch 11, wobei der einstellbare Kupplungsmechanismus Mittel zum Einstellen eines Neigungswinkels nach vorne und Mittel zum Einstellen eines Winkels von Flanke zu Flanke enthält und die Mittel zum Einstellen eines Winkels von Flanke zu Flanke betrieblich unabhängig von den Mitteln zum Einstellen eines Neigungswinkels nach vorne sind und ein Benutzer den Winkel von Flanke zu Flanke anpassen kann, ohne den Neigungswinkel nach vorne anzupassen.

13. Vorrichtung nach Anspruch 11, wobei die Schneidklinge eine spiralförmige Schneidfräse mit einem oberen Ende und einem unteren Ende ist, jedes Ende einen Schaft (420,422) enthält, der Schaft des oberen Endes der Schneidfräse an den Motor gekoppelt ist und der Schaft des unteren Endes der Schneidfräse an den Träger gekoppelt ist.

14. Verfahren zum Schneiden eines Werkstücks, beinhaltend:
Scannen eines Profils des gewünschten zu schneidenden Werkstücks;
Speichern der dem Profil des Werkstücks entsprechenden Daten in einer Speicherkomponente einer Rechenvorrichtung; und Umrechnen der dem Profil des Werkstücks entsprechenden Daten in Bewegungen eines Schneideelements einer Schneidevorrichtung;
**dadurch gekennzeichnet, dass** das Umrechnen der Daten entsprechend des Profils des Werkstücks in Bewegungen des Schneideelements das Bestimmen von Variationen im Profil des Werkstücks in eine dritte Richtung, rechtwinklig zu einer ersten Richtung und einer zweiten Richtung, und das Steuern der Bewegung des Schneideelements entlang der besagten ersten Richtung und der besagten zweiten Richtung einschließt.

15. Verfahren nach Anspruch 14, bei dem ein optischer Scanner verwendet wird und das Verfahren beinhaltet:
Anbringen des Werkstücks neben den Scanner,
Emittieren eines Lichts vom Scanner auf eine Fläche des Werkstücks;
Bewegen einer der Scanner und des Werkstücks relativ zueinander, wobei sich das Licht über die Fläche des Werkstücks bewegt; und
Messen der Intensität des Lichts, da es von der Fläche des Werkstücks reflektiert wird, wenn sich das Licht über die Fläche bewegt.

16. Verfahren nach Anspruch 15, ferner beinhaltet:
Bewegen des Scanners hinsichtlich der Fläche des Werkstücks in Reaktion auf Änderungen in der Intensität des von der Fläche reflektierten Lichts, wobei ein Teil des Scanners einen konstanten Abstand zur Fläche des Werkstücks beibehält, wen sich das Licht über die Fläche des Werkstücks bewegt.

17. Verfahren nach Anspruch 15, wobei das Messen der Intensität des Lichts beinhaltet:
Umrechnen der Messung der Intensität des von der Fläche des Werkstücks reflektierten Lichts in ein oder mehrere Signale; und
Berechnen einer Differenz in der Signalstärke zwischen zwei oder mehreren der besagten Signale,

18. Verfahren nach Anspruch 15, wobei das Messen der Intensität des Lichts beinhaltet:
Empfang mindestens eines Teils des von der Fläche des Werkstücks reflektierten Lichts;
Aufteilen mindestens eines Teils des empfangenen Lichts;
Richten des aufgeteilten Lichts auf eine Mehrzahl von Detektoren;
Übertragen der Intensität des von den Detektoren empfangenen Lichts in ein oder mehrere Signale; und
Berechnen von Änderungen in der Signalstärke zwischen den Signalen.

19. Verfahren nach einem beliebigen der Ansprüche 14 bis 18 zum Schneiden eines Werkstücks mit einer Schneidevorrichtung mit einem Schneideelement, das funktionell und beweglich an eine Basis gekoppelt ist, wobei die Schneidevorrichtung eine Rechenvorrichtung zum Steuern des Betriebs der Schneidevorrichtung und eine Schalttafel enthält, um Benutzern eine Schnittstelle zur Vorrichtung zur Verfügung zu stellen, wobei das Verfahren beinhaltet:
Anbringen des Werkstücks auf der Basis;
Auswählen eines Schnitttyps, mit dem das Werkstück bearbeitet werden soll, über die Schalttafel;
Einstellen der Ausrichtung des Schneideelements hinsichtlich der Basis als Ergebnis des Schnitttyps, der ausgewählt wurde, um das Werkstück dementsprechend zu bearbeiten;
Anzeigen von Informationen in Bezug auf den Schnitttyp, der angewandt
werden soll,
auf einer Anzeige; und Einleiten des Schnitts unter Verwendung der Schalttafel.

20. Verfahren nach Anspruch 19, ferner beinhaltend:
Bewegen des Schneideelements hinsichtlich der Basis durch eine Schneidebahn, wobei die Schneidebahn dem Profil eines zu schneidenden Werkstücks entspricht.

21. Verfahren nach einem beliebigen der Ansprüche 14 bis 20 zum Anweisen eines Benutzers, um gewünschte Informationen zum Schneiden eines Werkstücks mit einer Schneidevorrichtung mit einem Schneideelement bereitzustellen, das funktionell und beweglich an eine Basis gekoppelt ist, wobei die Schneidevorrichtung eine Rechenvorrichtung zum Steuern des Betriebs der Schneidevorrichtung und eine Schalttafel enthält, um Benutzern eine Schnittstelle zur Vorrichtung zur Verfügung zu stellen, und das Verfahren beinhaltet:
Bereitstellen auf Anfrage einer Angabe zu der aus einer Reihe von Optionen zu wählenden Option;
Bereitstellen des Bestätigens einer Angabe zu der aus einer Reihe von Optionen gewählten Option; und
Bereitstellen der Präsentation einer Angabe zu der aus einer Reihe von Optionen zuvor gewählten Option.

22. Verfahren nach Anspruch 21, wobei das Bereitstellen des Bestätigens einer Angabe zu der aus einer Reihe von Optionen gewählten Option das Bereitstellen von Schaltflächen auf der Schalttafel einschließt.

23. Verfahren nach Anspruch 21, wobei das Bereitstellen der Präsentation einer Angabe zu der zuvor aus einer Reihe von Optionen gewählten Option das Bereitstellen des Anzeigens auf einer Anzeige von Informationen in Bezug auf den Schnitttyp, der angewandt werden soll, einschließt.

24. Verfahren nach Anspruch 21, wobei die Reihe von Optionen gewünschte Schnitttypen einschließt, mit denen das Werkstück bearbeitet werden soll.

## Revendications

1. Appareil de découpe d'une pièce d'usinage, l'appareil comprenant :
un cadre (22);
un premier chariot (68) soutenu sur le cadre pour se déplacer par rapport au cadre dans une première direction ;
un deuxième chariot (70) soutenu sur le premier chariot pour se déplacer par rapport au cadre dans une deuxième direction ;
un moteur (104) couplé avec le deuxième chariot ;
une lame de découpage (160) couplée au moteur pour engager et découper la pièce d'usinage pendant le fonctionnement de l'appareil ;
des moyens pour déterminer un profil de la pièce d'usinage ;
des moyens pour convertir le profil déterminé de la pièce d'usinage dans un trajet correspondant à suivre par la lame de découpage ; et
des moyens pour déplacer la lame de découpage le long du trajet correspondant afin de découper la pièce d'usinage de la manière souhaitée ;
**caractérisé en ce que** des moyens pour convertir le profil déterminé de la pièce d'usinage en un trajet correspondant à suivre par la lame de découpage sont destinés à déterminer les variations dans le profil de la pièce de d'usinage dans une troisième direction perpendiculaire à ladite première direction et à ladite deuxième direction et commander le mouvement de la lame de découpage le long de ladite première direction et de ladite deuxième direction.

2. Appareil selon la revendication 1, dans lequel la deuxième direction est généralement perpendiculaire à la première direction et les moyens de détermination du profil de la pièce d'usinage comprennent un scanner (20) pour balayer le profil de la pièce d'usinage.

3. Appareil selon la revendication 2, dans lequel les moyens pour convertir le profil déterminé comprennent un dispositif de calcul (194) dans lequel les moyens de déplacement de la lame de découpage comprennent un premier moteur (84) pour déplacer le premier chariot dans la première direction et le dispositif de calcul commande le fonctionnement du scanner et le premier moteur.

4. Appareil selon la revendication 3, dans lequel les moyens de déplacement de la lame de découpage comprennent par ailleurs un deuxième moteur (104) pour déplacer le deuxième chariot dans la deuxième direction et le dispositif de calcul commande par ailleurs le fonctionnement du deuxième moteur.

5. Appareil selon la revendication 3, dans lequel le scanner est un scanner optique et le scanner comprend une source lumineuse (196), un premier objectif (200) en vue de la focalisation de la lumière provenant de la source lumineuse sur une surface de la pièce d'usinage à scanner et un premier capteur (206) pour contrôler la lumière réfléchie de la surface de la pièce d'usinage.

6. Appareil selon la revendication 5, dans lequel le scanner comprend par ailleurs un deuxième objectif (202) pour recevoir la lumière réfléchie de la surface de la pièce d'usinage et focaliser la lumière reçue, un diviseur de faisceau (204) pour scinder la lumière de la deuxième lentille et un deuxième capteur (208), une partie de la lumière du diviseur de faisceau est reçue par le premier capteur, une partie de la lumière du diviseur de faisceau est reçue par le deuxième capteur, les capteurs convertissent la lumière reçue en signaux et transmettent les signaux au dispositif de calcul et le dispositif de calcul compare les signaux provenant des capteurs.

7. Appareil selon la revendication 6, dans lequel le scanner comprend par ailleurs un moteur de scanner (186) pour déplacer le scanner en vue de le rapprocher ou de l'éloigner de la pièce d'usinage pendant le processus de balayage, le dispositif de calcul commande le mouvement du scanner par le moteur du scanner et le dispositif de calcul déplace le scanner en vue de le rapprocher ou de l'éloigner de la pièce d'usinage pendant le processus de balayage en réponse aux résultats de la comparaison des signaux des capteurs afin de maintenir une partie du scanner à une distance constante de la surface de la pièce d'usinage à scanner.

8. Appareil selon la revendication 1, comprenant par ailleurs :
un scanner (20) pour déterminer un profil de la pièce d'usinage ; et
un dispositif de calcul (194) pour commander le fonctionnement de l'appareil.

9. Appareil selon la revendication 8, dans lequel le premier chariot comprend un traîneau (174) pour soutenir une partie d'échantillon de la pièce d'usinage à découper, le mouvement du premier chariot déplace le traîneau et le scanner est positionné à côté du traîneau, le mouvement du premier chariot déplace le traîneau sous le scanner pour permettre au scanner de déterminer le profil de la pièce d'usinage.

10. Appareil selon la revendication 8, dans lequel le scanner est un scanner optique, le profil de la pièce d'usinage est stocké dans un composant de mémoire du dispositif de calcul et le dispositif de calcul commande le mouvement des premier et deuxième chariots pour déplacer la lame de découpage au travers de la pièce d'usinage dans un trajet de découpage qui correspond au profil de la pièce d'usinage.

11. Appareil selon la revendication, dans lequel le moteur est couplé au deuxième chariot par un support, le support est couplé au deuxième chariot par un mécanisme d'accouplement réglable (114) et le mécanisme d'accouplement réglable permet à un utilisateur de modifier sélectivement l'orientation de la lame de découpage par rapport au cadre pour effectuer différents types de découpe dans plusieurs pièces d'usinage présentant des profils différents.

12. Appareil selon la revendication 11, dans lequel le mécanisme d'accouplement réglable comprend des moyens pour ajuster un angle d'inclinaison vers l'avant et des moyens pour ajuster l'angle de rotation et les moyens pour ajuster l'angle de rotation sont indépendants, opérationnellement des moyens d'ajustement de l'angle d'inclinaison vers l'avant, un utilisateur pouvant régler l'angle de rotation sans ajuster l'angle d'inclinaison vers l'avant.

13. Appareil selon la revendication 11, dans lequel la lame de découpage est un foret de découpage spiralé présentant une extrémité supérieure et une extrémité inférieure, chaque extrémité comprend une tige (420, 422), la tige de l'extrémité supérieure du foret de découpage est couplée au moteur et la tige de l'extrémité inférieure du foret de découpage est couplée au support.

14. Procédé de découpage d'une pièce d'usinage comprenant :
le balayage d'un profil de la pièce d'usinage à découper ;
l'enregistrement des données correspondant au profil de la pièce d'usinage dans un élément de mémoire d'un dispositif de calcul ; et la conversion des données correspondant au profil de la pièce d'usinage dans des mouvements d'un élément de découpage d'un appareil de découpage ;
**caractérisé en ce que** la conversion des données correspondant au profil de la pièce d'usinage en mouvements de l'élément de découpage comprend la détermination de variations dans le profil de la pièce d'usinage dans une troisième direction perpendiculaire à une première direction et à une deuxième direction et la commande du mouvement de l'élément de découpage le long de ladite première direction et de ladite deuxième direction.

15. Procédé selon la revendication 14 utilisant un scanner optique, le procédé comprenant :
le placement de la pièce d'usinage à côté du scanner ;
l'émission d'une lumière du scanner sur la surface de la pièce d'usinage ;
le déplacement réciproque soit du scanner, soit de la pièce d'usinage, la lumière se déplaçant sur la surface de la pièce d'usinage ; et
la mesure de l'intensité de la lumière à mesure qu'elle est réfléchie de la surface de la pièce d'usinage lorsque la lumière se déplace sur la surface.

16. Procédé selon la revendication 15 comprenant par ailleurs :
le déplacement du scanner par rapport à la surface de la pièce d'usinage en réponse à des changements dans l'intensité de la lumière réfléchie de la surface, une partie du scanner maintenant une distance constante de la surface de la pièce d'usinage à mesure que la lumière se déplace sur la surface de la pièce d'usinage.

17. Procédé selon la revendication 15 dans lequel la mesure de l'intensité de la lumière comprend :
la conversion de la mesure de l'intensité de la lumière réfléchie sur la surface de la pièce d'usinage en un ou plusieurs signaux et le calcul d'une différence dans la force du signal entre deux desdits signaux ou plus.

18. Procédé selon la revendication 15, dans lequel la mesure de l'intensité de la lumière comprend :
la réception d'au moins une partie de la lumière réfléchie de la surface de la pièce d'usinage ;
la division d'au moins une partie de la lumière reçue ;
l'orientation de la lumière scindée sur plusieurs détecteurs ;
la traduction de l'intensité de la lumière reçue par les détecteurs en un ou plusieurs signaux ; et
le calcul des changements dans la force du signal entre les signaux.

19. Procédé selon l'une des revendications 14 à 18 pour découper une pièce d'usinage avec un appareil de découpage possédant un élément de découpage couplé de manière opérationnelle et mobile avec une base, dans lequel l'appareil de découpage comprend un dispositif de calcul pour commander le fonctionnement de l'appareil de découpage et un panneau de commande pour permettre à un utilisateur d'établir une interface avec l'appareil, le procédé comprenant :
le placement de la pièce d'usinage sur la base ;
la sélection d'un type de découpe à effectuer sur la pièce d'usinage via le panneau de commande ;
l'ajustement de l'orientation de l'élément de découpage par rapport à la base en raison du type de découpe choisie à effectuer sur la pièce d'usinage ;
l'affichage des informations concernant le type de découpe à effectuer sur un écran ;
et
l'initiation de la découpe en utilisant le panneau de commande.

20. Procédé selon la revendication 19, comprenant par ailleurs :
le déplacement de l'élément de découpage par rapport à la base par un trajet de découpage, le trajet de découpage étant mis en relation avec un profil de la pièce d'usinage à découper.

21. Procédé selon l'une de revendications 14 à 20 pour diriger un utilisateur afin de fournir des informations souhaitables pour découper une pièce d'usinage avec un appareil de découpage possédant un élément de découpage couplé de manière opérationnelle et mobile avec une base,
dans lequel l'appareil de découpage comprend un dispositif de calcul pour commander le fonctionnement de l'appareil de découpage et un panneau de commande pour permettre à un utilisateur d'établir une interface avec l'appareil, le procédé comprenant :
de prévoir la demande d'une indication d'une option à sélectionner à partir d'une série d'options ; de prévoir la réception d'une indication d'une option choisie à partir d'une série d'options ; et
de prévoir la présentation de l'indication d'une option préalablement choisie à partir d'une série d'options.

22. Procédé selon la revendication 21, dans lequel, pour prévoir la réception d'une indication d'une option choisie à partir d'une série d'options, des boutons sont disposés à cet effet sur le panneau de commande.

23. Procédé selon la revendication 21, dans lequel, pour prévoir la présentation d'une indication d'une option préalablement choisie à partir d'une série d'options, il est prévu l'affichage d'informations concernant le type de découpe à effectuer sur un écran.

24. Procédé selon la revendication 21, dans lequel la série d'options comprend des types de découpe souhaités à effectuer sur la pièce d'usinage.
